(19) Europäisches Patentamt
European Patent Office
Office européen des brevets

(11) **EP 4 300 856 A1**

(12) **EUROPEAN PATENT APPLICATION**
published in accordance with Art. 153(4) EPC

(43) Date of publication:
**03.01.2024  Bulletin 2024/01**

(21) Application number: **22778403.0**

(22) Date of filing: **22.02.2022**

(51) International Patent Classification (IPC):
**H04L 1/00** *(2006.01)*

(52) Cooperative Patent Classification (CPC):
**H04L 1/00; H04L 5/00; H04W 24/10; H04W 72/12**

(86) International application number:
**PCT/CN2022/077332**

(87) International publication number:
**WO 2022/206218 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.04.2021  CN 202110364167**

(71) Applicant: **Huawei Technologies Co., Ltd.
Shenzhen, Guangdong 518129 (CN)**

(72) Inventors:
• **LI, Ruijie
  Shenzhen, Guangdong 518129 (CN)**
• **GUAN, Lei
  Shenzhen, Guangdong 518129 (CN)**
• **LI, Shengyu
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD, APPARATUS AND SYSTEM**

(57)    A communication method, apparatus, and system are provided, and relate to the field of communication technologies, to resolve a problem of low reliability of data transmission in the conventional technology. A specific solution includes: A terminal device determines target DCI, determines first information based on the target DCI, and sends the first information to a network device. The target DCI indicates a target PDSCH, and the first information includes channel state information of the target PDSCH.

```
  ┌─────────────────┐              ┌─────────────────┐
  │ Network device  │              │ Terminal device │
  └────────┬────────┘              └────────┬────────┘
           │  501: The network device sends target
           │  DCI to the terminal device, and
           │  correspondingly, the terminal device
           │  receives the target DCI from the network
           │  device
           │ ──────────────────────────────▶│
           │               ┌────────────────────────────┐
           │               │  Determine the target DCI  │─ 502
           │               └────────────────────────────┘
           │               ┌────────────────────────────┐
           │               │ 503: Determine first       │
           │               │ information based on the   │─ 503
           │               │ target DCI, where the      │
           │               │ target DCI indicates a     │
           │               │ target PDSCH, and the      │
           │               │ first information includes │
           │               │ channel state information  │
           │               │ of the target PDSCH        │
           │               └────────────────────────────┘
           │  504: The terminal device sends the first
           │  information to the network device, and
           │  correspondingly, the network device receives
           │  the first information from the terminal device
           │◀──────────────────────────────│
```

FIG. 5

## Description

This application claims priority to Chinese Patent Application No. 202110364167.6, filed with the China National Intellectual Property Administration on April 03, 2021 and entitled "COMMUNICATION METHOD, APPARATUS, AND SYSTEM", which is incorporated herein by reference in its entirety.

## TECHNICAL FIELD

This application relates to the field of communication technologies, and in particular, to a communication method, apparatus, and system.

## BACKGROUND

Currently, a network device can schedule data based on channel state information. However, when channel state information of a channel is inaccurate, the network device cannot effectively schedule data based on the channel state information. Consequently, reliability of data transmission is low.

## SUMMARY

This application provides a communication method, apparatus, and system, to resolve a problem of low reliability of data transmission in the conventional technology.

To achieve the foregoing objective, the following technical solutions are used in this application. According to a first aspect, this application provides a communication method. An execution entity of the communication method may be a terminal device, or may be a chip in a terminal device, or may be a unit or a module that is included in a terminal device and that may perform the method. The method includes: The terminal device determines target downlink control information (downlink control information, DCI), determines first information based on the target DCI, and sends the first information to a network device. The target DCI indicates a target physical downlink shared channel (physical downlink shared channel, PDSCH), and the first information includes channel state information of the target PDSCH.

The terminal device determines one or more downlink transmissions based on the downlink control information, reports the channel state information to the network device based on the one or more downlink transmissions indicated by the downlink control information, and enables the network device to adjust, based on the channel state information reported by the terminal device, a parameter used for the data transmission. Therefore, reliability of the data transmission is improved by adjusting the parameter.

In a possible implementation, the target PDSCH belongs to a first PDSCH set, the target DCI belongs to a first DCI set, and the first DCI set is associated with the first PDSCH set.

In a possible implementation, the method for "the first DCI set is associated with the first PDSCH set" may include: Acknowledgment (acknowledgement, ACK) feedback information or negative acknowledgment (negative acknowledgment, NACK) feedback information corresponding to at least two PDSCHs in the first PDSCH set is located in one time unit. The ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by DCI in the first DCI set belongs to the first PDSCH set.

In a possible implementation, the method for "the first DCI set is associated with the first PDSCH set" may include: A location of a time domain resource at which the ACK feedback information or the NACK feedback information corresponding to the at least two PDSCHs in the first PDSCH set is located is indicated through second DCI, and the second DCI belongs to the first DCI set.

In a possible implementation, the second DCI is the target DCI.

In a possible implementation, the target DCI indicates at least one of the following: the target PDSCH and a target cell, where the target cell is a cell in which the target PDSCH is located.

In a possible implementation, the target DCI indicates the target PDSCH, and the target PDSCH is one or more PDSCHs in the first PDSCH set.

In a possible implementation, the method for "the target DCI indicates the target PDSCH" may include: PDSCHs in the first PDSCH set are sorted according to a preset rule, where the target DCI indicates a location of the target PDSCH in the first PDSCH set.

In a possible implementation, the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

In a possible implementation, the target DCI is a last piece of DCI whose time domain is in ascending order in the first PDSCH set. Based on the foregoing manner, a PDSCH scheduled in the last piece of DCI is newer than a PDSCH scheduled in another piece of DCI in the first DCI set. Therefore, more timely channel state information may be provided.

In a possible implementation, the target DCI indicates the target cell, and the target PDSCH is one or more PDSCHs in the first PDSCH set that are located in the target cell.

In a possible implementation, the method for "determining first information based on the target DCI" may include: The terminal device determines the first information based on data information included in the target PDSCH; or determines the first information based on a demodulation reference signal (demodulation reference signal, DMRS) corresponding to the target PDSCH.

In a possible implementation, if the terminal device does not receive the target PDSCH, the first information includes first state information, and the first state information indicates that the target PDSCH is not received.

In a possible implementation, the communication method may further include: The terminal device receives second information from the network device, where the second information is used to enable the terminal device to determine the first information based on the target DCI.

The terminal device enables determining of the first information only after receiving the second information. When the terminal device does not receive the second information, the terminal device does not need to receive or decode the first information. When the channel state information does not need to be reported, energy consumption of the terminal device may be reduced, and determining of the first information is also more flexible.

According to a second aspect, this application provides a communication method. An execution entity of the communication method may be a terminal device, or may be a chip in a terminal device, or may be a unit or a module that is included in a terminal device and that may perform the method. The method includes: The terminal device determines target DCI, and determines, based on the target DCI, whether to report first information. The target DCI indicates whether the terminal device reports the first information. The first information includes channel state information of a target PDSCH.

The terminal device determines, based on the target DCI, whether to report the first information, and determines and reports the first information only when determining that the first information needs to be reported. When determining that the first information does not need to be reported, the terminal device does not need to determine the first information. When the channel state information does not need to be reported, energy consumption of the terminal device may be reduced, and determining of the first information is also more flexible.

In a possible implementation, the target PDSCH belongs to a first PDSCH set, the target DCI belongs to a first DCI set, and the first DCI set is associated with the first PDSCH set.

In a possible implementation, the method for "the first DCI set is associated with the first PDSCH set" may include: Acknowledgment (acknowledgement, ACK) feedback information or negative acknowledgment (negative acknowledgment, NACK) feedback information corresponding to at least two PDSCHs in the first PDSCH set is located in one time unit. The ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by DCI in the first DCI set belongs to the first PDSCH set.

In a possible implementation, the method for "the first DCI set is associated with the first PDSCH set" may include: A location of a time domain resource at which the ACK feedback information or the NACK feedback information corresponding to the at least two PDSCHs in the first PDSCH set is located is indicated through second DCI, and the second DCI belongs to the first DCI set.

In a possible implementation, the second DCI is the target DCI.

In a possible implementation, the target DCI indicates at least one of the following: the target PDSCH or a target cell, where the target cell is a cell in which the target PDSCH is located.

In a possible implementation, the target DCI indicates the target PDSCH, and the target PDSCH is one or more PDSCHs in the first PDSCH set.

In a possible implementation, the method for "the target DCI indicates the target PDSCH" may include: PDSCHs in the first PDSCH set are sorted according to a preset rule, where the target DCI indicates a location of the target PDSCH in the first PDSCH set.

In a possible implementation, the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

In a possible implementation, the target DCI is a last piece of DCI whose time domain is in ascending order in the first PDSCH set. Based on the foregoing manner, a PDSCH scheduled in the last piece of DCI is newer than a PDSCH scheduled in another piece of DCI in the first DCI set. Therefore, more timely channel state information may be provided.

In a possible implementation, the target DCI indicates the target cell, and the target PDSCH is one or more PDSCHs in the first PDSCH set that are located in the target cell.

In a possible implementation, the method for "determining first information based on the target DCI" may include: The terminal device determines the first information based on data information included in the target PDSCH; or determines the first information based on a demodulation reference signal (demodulation reference signal, DMRS) corresponding to the target PDSCH.

In a possible implementation, if the terminal device does not receive the target PDSCH, the first information includes first state information, and the first state information indicates that the target PDSCH is not received.

In a possible implementation, the communication method may further include: The terminal device receives second information from the network device, where the second information is used to enable the terminal device to determine the first information based on the target DCI.

The terminal device enables determining of the first information only after receiving the second information. When the terminal device does not receive the second information, the terminal device does not need to receive or decode the first information. When the channel state information does not need to be reported, energy consumption of the terminal device may be reduced, and determining of the first information is also more flexible.

According to a third aspect, a communication method is provided. An execution entity of the communication method may be a network device, or may be a chip in a network device, or may be a unit or a module that is included in a network device and that may perform the method. The method includes: The network device sends target DCI to a terminal device, where the target DCI indicates a PDSCH; and the network device receives first information from the terminal device, where the first information is determined based on the target DCI, and the first information includes channel state information of a target PDSCH.

The network device may receive channel state information reported by the terminal device, and adjust, based on the channel state information, a parameter used for data transmission. Because the channel state information is obtained by determining, by the terminal device, one or more downlink transmissions based on downlink control information, and is determined based on one or more downlink transmissions indicated by the downlink control information, reliability of the data transmission may be improved by adjusting the parameter.

In a possible implementation, the method for "the first DCI set is associated with the first PDSCH set" may include: ACK feedback information or NACK feedback information corresponding to at least two PDSCHs in the first PDSCH set is located in one time unit. The ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by DCI in the first DCI set belongs to the first PDSCH set.

In a possible implementation, the method for "the first DCI set is associated with the first PDSCH set" may include: A location of a time domain resource at which the ACK feedback information or the NACK feedback information corresponding to the at least two PDSCHs in the first PDSCH set is located is indicated through second DCI, and the second DCI belongs to the first DCI set. In a possible implementation, the second DCI is the target DCI.

In a possible implementation, the target DCI indicates at least one of the following: the target PDSCH or a target cell, where the target cell is a cell in which the target PDSCH is located.

In a possible implementation, the target DCI indicates the target PDSCH, and the target PDSCH is one or more PDSCHs in the first PDSCH set.

In a possible implementation, the method for "the target DCI indicates the target PDSCH" may include: PDSCHs in the first PDSCH set are sorted according to a preset rule, where the target DCI indicates a location of the target PDSCH in the first PDSCH set.

In a possible implementation, the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

In a possible implementation, the target DCI is a last piece of DCI whose time domain is in ascending order in the first PDSCH set. Based on the foregoing manner, a PDSCH scheduled in the last piece of DCI is newer than a PDSCH scheduled in another piece of DCI in the first DCI set. Therefore, more timely channel state information may be provided.

In a possible implementation, the target DCI indicates the target cell, and the target PDSCH is one or more PDSCHs in the first PDSCH set that are located in the target cell.

In a possible implementation, the communication method may further include: The network device sends second information to the terminal device, where the second information is used to enable the terminal device to determine the first information based on the target DCI.

According to a fourth aspect, a communication method is provided. An execution entity of the communication method may be a network device, or may be a chip in a network device, or may be a unit or a module that is included in a network device and that may perform the method. The method includes: The network device sends target DCI to a terminal device, where the target DCI indicates whether the terminal device reports first information, and the target DCI indicates a target PDSCH, the network device receives the first information from the terminal device, where the first information is determined based on the target DCI, and the first information includes channel state information of the target PDSCH.

The target DCI indicates whether the terminal device reports the first information. The terminal device determines and reports the first information only when determining that the first information needs to be reported, and the network device may receive the first information. When determining that the first information does not need to be reported, the terminal device does not need to determine the first information. When the channel state information does not need to be reported, energy consumption of the terminal device may be reduced, and determining of the first information is also more flexible.

In a possible implementation, the target PDSCH belongs to a first PDSCH set, the target DCI belongs to a first DCI set, and the first DCI set is associated with the first PDSCH set.

In a possible implementation, the method for "the first DCI set is associated with the first PDSCH set" may include: ACK feedback information or NACK feedback information corresponding to at least two PDSCHs in the first PDSCH set is located in one time unit. The ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by DCI in the first DCI set belongs to the first PDSCH set.

In a possible implementation, the method for "the first DCI set is associated with the first PDSCH set" may include: A location of a time domain resource at which the ACK feedback information or the NACK feedback information corresponding to the at least two PDSCHs in the first PDSCH set is located is indicated through second DCI, and the second DCI belongs to the first DCI set.

In a possible implementation, the second DCI is the target DCI.

In a possible implementation, the target DCI indicates at least one of the following: the target PDSCH or a target cell, where the target cell is a cell in which the target PDSCH is located.

In a possible implementation, the target DCI indicates the target PDSCH, and the target PDSCH is one or more PDSCHs in the first PDSCH set.

In a possible implementation, the method for "the target DCI indicates the target PDSCH" may include: The target DCI indicates a location of the target PDSCH in the first PDSCH set, and the PDSCHs in the first PDSCH set are sorted according to a preset rule.

In a possible implementation, the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

In a possible implementation, the target DCI is a last piece of DCI whose time domain is in ascending order in the first PDSCH set. Based on the foregoing manner, a PDSCH scheduled in the last piece of DCI is newer than a PDSCH scheduled in another piece of DCI in the first DCI set. Therefore, more timely channel state information may be provided.

In a possible implementation, the target DCI indicates the target cell, and the target PDSCH is one or more PDSCHs in the first PDSCH set that are located in the target cell.

In a possible implementation, the communication method may further include: sending second information to the terminal device, where the second information is used to enable the terminal device to determine the first information based on the target DCI.

According to a fifth aspect, this application provides a communication apparatus. The communication apparatus includes at least one module configured to perform the communication method according to the first aspect or any possible implementation of the first aspect. Alternatively, the communication apparatus includes at least one module configured to perform the communication method according to the second aspect or any possible implementation of the second aspect.

According to a sixth aspect, this application provides a communication apparatus. The communication apparatus includes at least one module configured to perform the communication method according to the third aspect or any possible implementation of the third aspect. Alternatively, the communication apparatus includes at least one module configured to perform the communication method according to the fourth aspect or any possible implementation of the fourth aspect.

According to a seventh aspect, this application provides a communication apparatus. The communication apparatus includes a memory and a processor. The memory is coupled to the processor. The memory is configured to store computer program code, and the computer program code includes computer instructions. When the processor executes the computer instructions, the communication apparatus performs the communication method according to the first aspect or any possible implementation of the first aspect, or performs the communication method according to the second aspect or any possible implementation of the second aspect.

According to an eighth aspect, this application provides a communication apparatus. The communication apparatus includes a memory and a processor. The memory is coupled to the processor. The memory is configured to store computer program code, and the computer program code includes computer instructions. When the processor executes the computer instructions, the communication apparatus performs the communication method according to the third aspect or any possible implementation of the third aspect, or performs the communication method according to the fourth aspect or any possible implementation of the fourth aspect.

According to a ninth aspect, this application provides a chip system. The chip system is applied to a communication apparatus. The chip system includes one or more interface circuits and one or more processors. The interface circuit and the processor are connected to each other through a line; and the interface circuit is configured to receive a signal from a memory of the communication apparatus, and send the signal to the processor. The signal includes computer instructions stored in the memory. When the processor executes the computer instructions, the communication apparatus performs the communication method according to the first aspect or any possible implementation of the first aspect, or performs the communication method according to the second aspect or any possible implementation of the second aspect.

According to a tenth aspect, this application provides a chip system. The chip system is applied to a communication apparatus. The chip system includes one or more interface circuits and one or more processors. The interface circuit and the processor are connected to each other through a line; and the interface circuit is configured to receive a signal from a memory of the communication apparatus, and send the signal to the processor. The signal includes computer instructions stored in the memory. When the processor executes the computer instructions, the communication apparatus performs the communication method according to the third aspect or any possible implementation of the third aspect, or performs the communication method according to the fourth aspect or any possible implementation of the fourth aspect.

According to an eleventh aspect, this application provides a computer-readable storage medium. The computer-readable storage medium includes computer instructions. When the computer instructions are run on a communication apparatus, the communication apparatus is enabled to perform the communication method according to the first aspect and any possible implementation of the first aspect, or perform the communication method according to the second aspect and any possible implementation of the second aspect.

According to a twelfth aspect, this application provides a computer-readable storage medium. The computer-readable storage medium includes computer instructions. When the computer instructions are run on a communication apparatus, the communication apparatus is enabled to perform the communication method according to the third aspect or any possible implementation of the third aspect, or perform the communication method according to the fourth aspect or any possible implementation of the fourth aspect.

According to a thirteenth aspect, this application provides a computer program product. The computer program product includes computer instructions. When the computer instructions are run on a communication apparatus, the communication apparatus is enabled to perform the communication method according to the first aspect or any possible implementation of the first aspect, or perform the communication method according to the second aspect or any possible implementation of the second aspect.

According to a fourteenth aspect, this application provides a computer program product. The computer program product includes computer instructions. When the computer instructions are run on a communication apparatus, the communication apparatus is enabled to perform the communication method according to the third aspect or any possible implementation of the third aspect, or perform the communication method according to the fourth aspect or any possible implementation of the fourth aspect.

According to a fifteenth aspect, this application provides a communication system, including at least one network device and at least one terminal device. When the network device and the terminal device are in the communication system, the network device and the terminal device are configured to perform the method according to any one of the first aspect to the fourth aspect or any possible manner of the foregoing aspect.

These aspects or other aspects of this application are simpler and easier to understand in the following description.

## BRIEF DESCRIPTION OF DRAWINGS

FIG. 1 is a schematic diagram of a structure of a communication system according to an embodiment of this application;

FIG. 2 is a schematic diagram of indicating a time unit through K1 according to an embodiment of this application;

FIG. 3a is a schematic diagram of a scenario in which a terminal device determines a time unit according to an embodiment of this application;

FIG. 3b is a schematic diagram of a PUCCH resource set according to an embodiment of this application;

FIG. 3c is a schematic diagram of feeding back a CQI by a terminal device according to an embodiment of this application;

FIG. 3d is a schematic diagram of reporting types of three channel states according to an embodiment of this application;

FIG. 4 is a schematic diagram of a structure of a communication apparatus according to an embodiment of this application;

FIG. 5 is a schematic flowchart 1 of a communication method according to an embodiment of this application;

FIG. 6 is a schematic diagram of feeding back a plurality of ACKs/NACKS in one slot according to an embodiment of this application;

FIG. 7 is a schematic diagram 1 of a first PDSCH set according to an embodiment of this application;

FIG. 8 is a schematic diagram 2 of a first PDSCH set according to an embodiment of this application;

FIG. 9 is a schematic diagram 1 of a scenario in which a terminal device determines target DCI according to an embodiment of this application;

FIG. 10 is a schematic diagram 2 of a scenario in which a terminal device determines target DCI according to an embodiment of this application;

FIG. 11a is a schematic diagram 3 of a scenario in which a terminal device determines target DCI according to an embodiment of this application;

FIG. 11b is a schematic diagram 4 of a scenario in which a terminal device determines target DCI according to an embodiment of this application;

FIG. 12a is a schematic diagram 1 of a target PDSCH according to an embodiment of this application;

FIG. 12b is a schematic diagram 2 of a target PDSCH according to an embodiment of this application;

FIG. 13 is a schematic flowchart 2 of a communication method according to an embodiment of this application;

FIG. 14 is a schematic diagram 1 of a structure of a communication apparatus according to an embodiment of this application;

FIG. 15 is a schematic diagram 2 of a structure of a communication apparatus according to an embodiment of this application;

FIG. 16 is a schematic diagram 3 of a structure of a communication apparatus according to an embodiment of this application;

FIG. 17 is a schematic diagram 4 of a structure of a communication apparatus according to an embodiment of this application;

FIG. 18 is a schematic diagram 5 of a structure of a communication apparatus according to an embodiment of this application; and

FIG. 19 is a schematic diagram 6 of a structure of a communication apparatus according to an embodiment of this application.

## DESCRIPTION OF EMBODIMENTS

In this application, the word "exemplary" or "for example" is used to represent giving an example, an illustration, or a description. Any embodiment or design scheme described as an "exemplary" or "for example" in embodiments of this application should not be explained as being more preferred or having more advantages than another embodiment or design scheme. Exactly, use of the word "example", "for example", or the like is intended to present a related concept in a specific manner.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise stated, "a plurality of" means two or more than two.

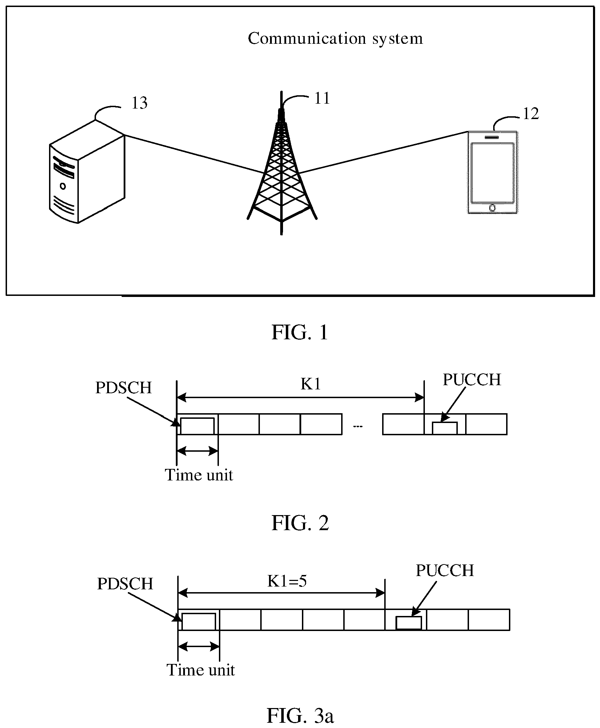

The communication method provided in embodiments of this application is applicable to a communication system. FIG. 1 shows a structure of the communication system. As shown in FIG. 1, the communication system may include: at least one access network device 11 and at least one terminal device 12. The access network device 11 and the terminal device 12 establish a connection in a wireless communication manner or a wired communication manner.

For example, uplink transmission means that the terminal device 12 sends uplink information to the access network device 11. The uplink information may include one or more of uplink data information, uplink control information, and a reference signal (reference signal, RS). A channel used to transmit the uplink information is referred to as an uplink channel, and the uplink channel may be a physical uplink shared channel (physical uplink shared channel, PUSCH) or a physical uplink control channel (physical uplink control channel, PUCCH). The PUSCH is used to carry uplink data, and the uplink data may also be referred to as the uplink data information. The PUCCH is used to carry uplink control information (uplink control information, UCI) fed back by the terminal device. The UCI may include channel state information (channel state information, CSI), an ACK/NACK, and the like.

For example, downlink transmission means that the access network device 11 sends downlink information to the terminal device 12. The downlink information may include one or more of downlink data information, downlink control information, and a downlink reference signal. The downlink reference signal may be a channel state information reference signal (channel state information reference signal, CSI-RS) or a phase tracking reference signal (phase tracking reference signal, PTRS). A channel used to transmit the downlink information is referred to as a downlink channel, and the downlink channel may be a PDSCH or a physical downlink control channel (physical downlink control channel, PDCCH). The PDCCH is used to carry DCI, and the PDSCH is used to carry downlink data. The downlink data may also be referred to as the downlink data information.

Optionally, a network architecture shown in FIG. 1 may further include a core network device 13. The terminal device 12 may be connected to the access network device 11 in a wireless manner, and the access network device 11 may be connected to the core network device 13 in a wired or wireless manner. The core network device 13 and the access network device 11 may be independent different physical devices, or the core network device 13 and the access network device 11 may be a same physical device, and all/a part of logical functions of the core network device 13 and the access network device 11 are integrated into the physical device.

It should be noted that in the network architecture shown in FIG. 1, the terminal device 12 may be fixed, or may be movable. This is not limited. The network architecture shown in FIG. 1 may further include another network device, such as a wireless relay device and a wireless backhaul device. This is not limited. In the architecture shown in FIG. 1, a quantity of terminal devices, a quantity of access network devices, and a quantity of core network devices are not limited.

The technical solutions in embodiments of this application may be applied to various communication systems. For example, a long term evolution (long term evolution, LTE) system, a 5th generation (5th generation, 5G) mobile communication system, and a future mobile communication system.

Based on the network architecture provided in FIG. 1, the following describes dynamic scheduling and semi-persistent scheduling.

The access network device sends the downlink control information to the terminal device in dynamic scheduling. The terminal device receives, on the PDCCH, the downlink control information sent by the access network device. After receiving the downlink control information, the terminal device may receive downlink data carried on the PDSCH indicated by the downlink control information, and decode the received downlink data. If the terminal device succes sfully decodes the downlink data, the terminal device may send ACK feedback information to the network device. If the terminal device fails to decode the downlink data, the terminal device may send NACK feedback information to the network device.

The access network device sends higher layer signaling (for example, the higher layer signaling may be RRC control signaling) to the terminal device in semi-persistent scheduling. After receiving the higher layer signaling, if the terminal device further receives the activated downlink control information, the terminal device receives, based on indication information in the activated downlink control information and a configuration of the higher layer signaling, the downlink data that is carried on the PDSCH and that is sent by the network device. After receiving the downlink data, the terminal device may decode the downlink data, and send the ACK feedback information or the NACK feedback information to the network device. A difference between the semi-persistent scheduling and the dynamic scheduling lies in that, after being activated through the downlink control information, indication and scheduling of the downlink control information are no longer required in a subsequent downlink data transmission process.

In a case of the dynamic scheduling or semi-persistent scheduling, before sending, to the access network device, the ACK feedback information or the NACK feedback information corresponding to the PDSCH, the terminal device needs to first determine a resource used for feeding back the ACK feedback information or the NACK feedback information, and then, send the ACK feedback information or the NACK feedback information by using the determined resource.

A resource of the ACK feedback information or the NACK feedback information corresponding to the PDSCH is indicated by the network device. For example, the network device first indicates a first time unit to the terminal device through K1. Then, in the first time unit, the terminal device determines, with reference to factors such as indication information sent by the network device and a payload size (payload size), a PUCCH resource used for sending the ACK feedback information or the NACK feedback information in the first time unit. The indication information may be a PUCCH resource indicator (PUCCH resource indicator, PRI). The payload size refers to a size of information to be sent on the PUCCH resource. For example, the payload size may be 5 bits (bit).

FIG. 2 is a schematic diagram of indicating a first time unit through K1. As shown in FIG. 2, K1 represents an interval between a time unit in which a PDSCH is located and a time unit in which a PUCCH is located. Specifically, a start point of K1 is a time unit in which a terminal device receives the PDSCH, and an end point of K1 is a first time unit in which ACK feedback information or NACK feedback information corresponding to the PDSCH is fed back.

In some embodiments, in a case of dynamic scheduling, indication information of K1 and indication information used to determine a PUCCH resource may be carried in DCI. In a case of semi-persistent scheduling, the indication information of K1 and the indication information used to determine the PUCCH resource may be configured through higher layer signaling, or may be determined through DCI used to activate the semi-persistent scheduling.

A specific implementation of K1 is as follows: The network device preconfigures a set of K1 for the terminal device. In this way, the terminal device may determine one value from the set through the indication information of K1, and determine, based on the value, a first time unit used to feed back an ACK or a NACK corresponding to the PDSCH.

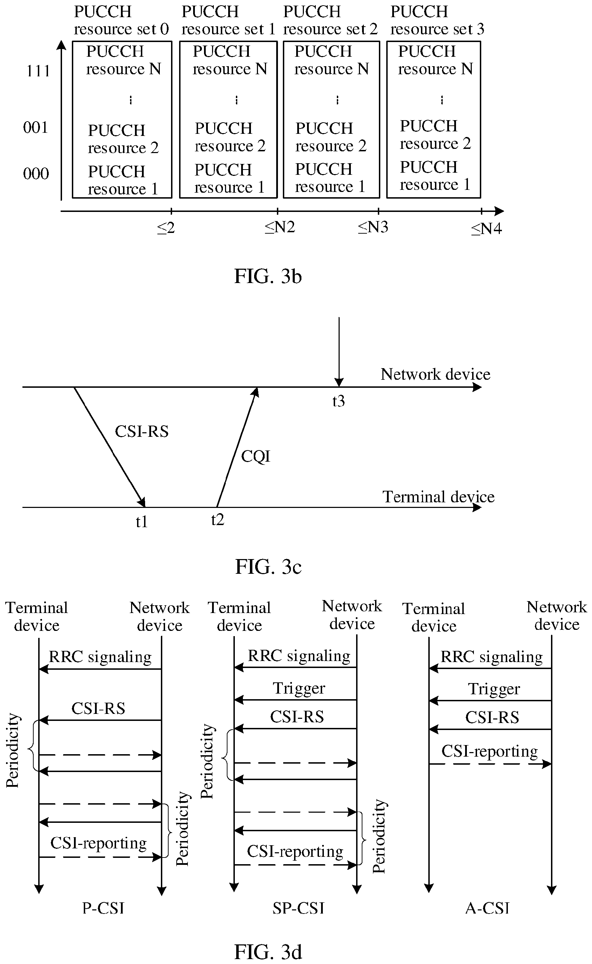

For example, with reference to FIG. 2, it is assumed that the set of K1 configured by the network device for the terminal device is 11, 2, 3, 4, 5}, and the terminal device determines that K1=5 through the indication information of K1. In this case, as shown in FIG. 3a, the terminal device determines that the first time unit is a fifth time unit after the PDSCH is received.

After determining the first time unit for feeding back the ACK/NACK, the terminal device may determine, in the first time unit, the PUCCH resource used to send the ACK feedback information or the NACK feedback information.

It may be understood that feedback of the ACK/NACK supports feedback in a form of a codebook. The codebook is a string of sequences formed by a plurality of ACKs/NACKs. For example, there are five PDSCHs, which are respectively decoded as NNAANs, where N represents the NACK and A represents the ACK. Decoding results of the five PDSCHs may be used to form a 5-bit bit sequence. Then, the entire five bits are fed back to the network device.

In an implementation, a resource set of the PUCCH is first determined based on a codebook size. A maximum payload size (maxPayloadSize) in each resource set in a resource set combination associated with the terminal device may divide a codebook size of UCI supported by the terminal device into several intervals. FIG. 3b is used as an example. The terminal device supports four resource sets. A maximum payload size indicated in a resource set 0 is 2 bits, a maximum payload size indicated in a resource set 1 is N2 bits, a maximum payload size indicated in a resource set 2 is N3 bits, and a maximum payload size indicated in a resource set 3 is N4 bits. In the four resource sets, a codebook size of the PUCCH that may be supported by the terminal device may be divided into four ranges: a codebook size is less than or equal to 2 bits, a codebook size is greater than 2 bits and less than or equal to N2 bits, a codebook size is greater than N2 bits and less than or equal to N3 bits, and a codebook size is greater than N3 bits and less than or equal to N4 bits. The four ranges respectively correspond to the resource set 0, the resource set 1, the resource set 2, and the resource set 3. A resource in a resource set is selected for sending when a codebook size of the ACK/NACK to be sent by the terminal belongs to a range. A specific value of N2, a specific value of N3, and a specific value of N4 may be configured through the higher layer signaling. In an implementation, the resource set is configured through the network device.

Then, a specific resource in the resource set is selected based on dynamic indication information PRI in the DCI. The resource includes one or more of the following parameters: marking a resource identifier of the resource, a format of the PUCCH, and a time domain, a frequency domain, and an orthogonal code related to the format. A time-frequency resource used to feed back the ACK/NACK may be determined based on a variable indicated in the resource.

In addition, when the PUCCH resource is determined from a specific resource set based on the PRI, in addition to the foregoing direct indication by using the PRI, the PRI and implicit indication are further supported. The PRI is generally three bits. When a quantity of PUCCH resources in a PUCCH resource set is greater than eight, the PUCCH resource set is divided into eight subsets (subsets). The PRI indicates which subset is selected, and a start control channel element (control channel element, CCE) of the PDCCH is used to implicitly indicate which resource in the subset is selected.

Based on the network architecture provided in FIG. 1, the following describes measurement of channel state information. Specifically, a channel quantity indicator (channel quantity indicator, CQI) is used as an example for description. As shown in FIG. 3c, the network device (the network device is an access network device, a core network device, or another network device) sends a CSI-RS to the terminal device. The terminal device receives the CSI-RS at a moment t1, and measures a channel based on the CSI-RS to obtain a CQI. The terminal device feeds back the CQI to the network device at a moment t2. The network device schedules downlink data at a moment t3 based on the received CQI. In other words, the network device uses the CQI measured by the terminal device at the moment t1 only at the moment t3. Because a channel changes with time, the CQI fed back by the terminal device may be inaccurate. Because the CQI fed back by the terminal device may not accurately feed back channel state information of the current channel, high data reliability cannot be achieved if the network device performs data scheduling only based on the CQI fed back by the terminal device.

For example, it is assumed that a channel condition is good when the terminal device measures the channel at the moment t1, but a channel state becomes poor when the network device actually schedules data at the moment t3. In this case, if the network device performs data scheduling only based on the channel state information fed back by the terminal device, there is a high probability that an error occurs in data transmission. Therefore, the measured CQI cannot be used to accurately describe a channel state during data transmission.

In the conventional technology, to improve accuracy of channel measurement, an OLLA technology may be used to track a current state of the channel. However, when the OLLA technology is applied to a scenario in which reliability of the data transmission is high, there is a low probability that the terminal device feeds back a NACK to the network device (for example, in some scenarios, the probability that the terminal device feeds back the NACK is $10^{-6}$. In this case, the network device sends $10^6$ pieces of downlink data to the terminal device, and the terminal device feeds back the NACK once). Therefore, the network device cannot effectively track the current state of the channel, and a high reliability requirement of data transmission cannot be ensured. Especially in an ultra-reliable and low latency communications (ultra-reliable and low latency communications, URLLC) scenario in which higher reliability is required, a problem of low reliability of the data transmission is particularly prominent.

To resolve the foregoing problem, embodiments of this application provide a communication method. The terminal device determines one or more downlink transmissions based on the downlink control information, determines the channel state information based on the one or more downlink transmissions indicated by downlink control, reports the channel state information to the network device, and enables the network device to adjust, based on the channel state information reported by the terminal device, a parameter used for data transmission. Therefore, reliability of the data transmission is improved by adjusting the parameter.

For ease of understanding by a person skilled in the art, related elements or technical terms in embodiments of this application are first briefly described herein.

1. Terminal device

The terminal device may be a mobile terminal device, such as a mobile phone (or referred to as a "cellular" phone) and a computer having a mobile terminal device, or may be a portable, pocket-sized, handheld, computer-built-in, or vehicle-mounted mobile device, which exchanges language and/or data with a radio access network (radio access network, RAN) node. For example, the terminal device may be: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal device in self-driving (self-driving), a wireless terminal device in remote medical surgery (remote medical surgery), a wireless terminal device in a smart grid (smart grid), a wireless terminal device in transportation safety (transportation safety), a wireless terminal device in a smart city (smart city), or a wireless terminal device in a smart home (smart home).

2. Network device

The network device is a device deployed in a radio access network to provide a wireless communication function for the terminal device. The network device may include various forms of macro base stations, micro base stations (also referred to as small stations), relay stations, access points, and the like. In systems using different radio access technologies, names of network devices may be different. For example, in a global system for mobile communications (global system for mobile communications, GSM) or a code division multiple access (code division multiple access, CDMA) network, a network device is referred to as a base transceiver station (base transceiver station, BTS). In wideband code division multiple access (wideband code division multiple access, WCDMA), a network device is referred to as a NodeB (NodeB, NB). In a long term evolution (long term evolution, LTE) system, a network device is referred to as an evolved NodeB (evolved NodeB, eNB). Alternatively, the network device may be a radio controller in a cloud radio access network (cloud radio access network, CRAN) scenario. Alternatively, the network device may be a base station device in a new radio (new radio, NR) network. Alternatively, the network device may be a wearable device or a vehicle-mounted device. Alternatively, the network device may be a transmission and reception point (transmission and reception point, TRP).

3. CSI-RS

A downlink channel is generally measured through the CSI-RS. The network device sends the CSI-RS to the terminal device. After receiving the CSI-RS, the terminal device is used for channel measurement and interference measurement. The terminal device calculates, based on the received CSI-RS, an indicator that needs to be measured, for example, a rank indicator (rank indicator, RI), a pre-coding matrix indicator (pre-coding matrix indicator, PMI), or a CQI, and then reports the content. Two more important parts of a CSI-RS configuration are a CSI-RS reporting configuration (ReportConfig) and a CSI-RS resource configuration (ResourceConfig). The reporting configuration is used to configure a parameter related to channel reporting, for example, a reported type and a reported measurement index. The resource configuration is used to configure related information of a measured time-frequency resource.

Reported types of the channel state may be classified into three types: periodic CSI (periodic CSI, P-CSI), semi-persistent CSI (semipersistent CSI, SP-CSI), and aperiodic CSI (aperiodic CSI, A-CSI). The P-CSI is configured by radio resource control (radio resource control, RRC), is periodically sent, and does not need to be triggered after the configuration. The SP-CSI is triggered through a media access control (media access control, MAC) control element (control element, CE) or DCI, and is sent periodically after the triggering. The A-CSI is triggered by DCI. After being triggered, the A-CSI is reported only once on a specified PUSCH in a specified slot. The DCI used to trigger the A-CSI is DCI used to trigger a physical uplink shared channel (physical uplink shared channel, PUSCH) of uplink data. FIG.

3d is a schematic diagram of reported types of three channel states.

The reported measured indexes may include a rank indicator, a pre-coding matrix indicator, a CQI, and the like. All or a part of the indexes may be selected to be reported by configuring variables in the reporting configuration.

In addition, reporting of the channel states further supports wideband feedback and narrowband feedback. The wideband feedback represents that only one value is fed back in an entire reporting bandwidth, and the narrowband feedback represents that each subband (subband) is separately fed back. In addition, a size of each subband is specified in a protocol, and is specifically shown in Table 1. For a fixed bandwidth part (bandwidth part, BWP), a quantity of physical resource blocks (physical resource block, PRB) included in each subband is fixed. For example, if one BWP includes 50 PRBs, a size of a subband of the BWP is 4 or 8. A specific one may be specified by higher layer signaling. In addition, for the narrowband feedback, feedback may be further performed discretely or continuously.

**Table 1**

| BWP (PRBs) | Size of a subband (PRBs) |
|---|---|
| <24 | N/A |
| 24-72 | 4, 8 |
| 73-144 | 8, 16 |
| 145-275 | 16, 32 |

Resources of the CSI-RS may also be configured in three types: periodic, semi-persistent (semi-persistent), and aperiodic (aperiodic). There is a specific relationship between a reporting type of channel states and a configuration manner of a resource for measurement corresponding to the reporting type of channel states, which is specifically shown in Table 2. It may be learnt from Table 2 that for a resource configured in a periodic type, reporting of the P-CSI, reporting of the SP-CSI, and reporting of the A-CSI may be supported, while for an aperiodic resource, only aperiodic reporting is supported.

**Table 2**

| CSI-RS resource | P-CSI | SP-CSI | A-CSI |
|---|---|---|---|
| Periodicity | Support | Support | Support |
| Semi-persistent | Not support | Support | Support |
| Aperiodic | Not support | Not support | Support |

In addition, in terms of functions of the resources of the CSI-RS, the resources of the CSI-RS may be classified into three types: NZP-CSI-RS for channel, ZP-CSI-RS for interference, and NZP-CSI-RS for interference.

The NZP-CSI-RS for channel represents an NZP-CSI-RS used for channel measurement.

The ZP-CSI-RS for interference represents the CSI-RS used for interference measurement. If the resources are configured, resources in the resource set are in a one-to-one correspondence with resources in a resource set of the NZP-CSI-RS for channel. The ZP-CSI-RS for interference is generally used for interference measurement. Therefore, ZP-CSI-RS for interference is also recorded as CSI-IM (channel state information-interference measurement).

The NZP-CSI-RS for interference represents the NZP-CSI-RS used for interference measurement. The following further explains a difference between the ZP-CSI-RS and the NZP-CSI-RS.

The ZP-CSI-RS refers to a zero power CSI-RS, and essentially means that a target base station does not send any information on the configured ZP-CSI-RS, and the user performs detection on the resource. The detected signal is interference (because the target base station does not send any information). A difference between the NZP-CSI-RS and the ZP-CSI-RS lies in the NZP-CSI-RS. The target base station sends a known sequence on a configured resource, and a channel/interference may be obtained through the known sequence.

The following describes configurations related to CSI-RS measurement. The configurations related to CSI-RS measurement mainly include a CSI-RS reporting configuration, a CSI-RS resource configuration, and the like.

a. The CSI-RS reporting configuration is mainly used to configure information related to CSI reporting. The following briefly describes several parameters related to embodiments of this application.

CSI-RS reporting configuration identifier (ReportConfigId): An identity document (identity document, ID) of a CSI-RS reporting configuration identifies the CSI-RS reporting configuration. Configuring a resource of a CSI-RS used for channel measurement (resourcesForChannelMeasurement): Resource configuration is associated through a CSI-RS resource configuration identifier.

Configuring a resource of a CSI-RS used for interference measurement (CSI-IM-ResourcesForInterference): The CSI-RS resource configuration identifier is associated with the resource configuration, and the ZP-CSI-RS resource may also be used to describe the resource used for interference measurement.

Configuring the NZP-CSI-RS resource used for interference measurement (nzp-CSI-RS-ResourcesForInterference): Resource configuration is associated through a CSI-RS resource configuration identifier.

A reporting type of CSI includes periodic reporting, semi-persistent reporting, and aperiodic reporting.

Reporting quantity (reportQuantity): The terminal device is selected to report different CSI information through different configurations, including a CSI-RS resource indicator (CSI-RS Resource Indicator, CRI), an RI, a PMI, a CQI, and the like.

b. The CSI-RS resource configuration is used to configure resource-related information used for CSI measurement. The following briefly describes several parameters related to embodiments of this application.

CSI-RS resource configuration identifier: ID of the CSI-RS resource configuration identifies the CSI-RS resource configuration, and is associated with the CSI-RS reporting configuration through the variable.

Configuring a resource-combining queue (CSI-RS-ResourceSetList): The queue may include a resource set used for channel measurement and a resource set used for interference measurement. The NZP-CSI-RS-ResourceSetId and/or the CSI-IM-ResourceSetId are associated with the configuration of the resource set. A main difference between a resource configured in an NZP-CSI-RS-ResourceSet and a resource configured in a CSI-IM-ResourceSet is that a CSI-RS of a known sequence is sent in an NZP-CSI-RS resource, and channel measurement or interference measurement is performed through the CSI-RS of the known sequence. The CSI-IM resource is also referred to as the ZP-CSI-RS resource. No information is sent on the resource, and all received information is interference.

Resource type (resourceType): The resource type may be classified into a periodic resource, a semi-persistent resource, and an aperiodic resource.

c. NZP-CSI-RS-ResourceSet, configured to configure a CSI-RS resource set of the NZP, where the NZP-CSI-RS-ResourceSet may include at least one resource. The terminal device measures channel information based on these resources, and feeds back the channel information. When a plurality of resources exist in one resource set, a CRI variable fed back by the terminal device indicates a resource on which channel information obtained through measurement is specifically fed back by the terminal device, for example, CRI=0, which represents that the channel information fed back by the terminal device is channel information obtained through measurement on a resource whose resource id=0.

NZP-CSI-RS-ResourceSetId: represents an ID of the NZP-CSI-RS resource set.

NZP-CSI-RS-Resources: Resources included in the resource set are associated with each NZP-CSI-RS resource through the NZP-CSI-RS-ResourceId.

d. CSI-IM-ResourceSet: A resource set used for interference measurement is configured, which is similar to the NZP-CSI-RS-ResourceSet. Details are not described herein.

e. The NZP-CSI-RS-Resource is used to configure information related to the NZP-CSI-RS resource, and is associated with a resource set through the NZP-CSI-RS-ResourceId.

f. The CSI-IM-Resource is used to configure related information of a CSI-IM resource. The CSI-IM-Resource is associated with a CSI-IM resource set through the CSI-IM-ResourceId. The CSI-IM-Resource is similar to the NZP-CSI-RS resource, and details are not described herein again.

4. A trigger method for the A-CSI and the SP-CSI

Both the A-CSI and the SP-CSI may be triggered through DCI and fed back on a PUSCH.

a. A trigger method for the A-CSI

There is an indication field "CSI request" in the DCI, which indicates a trigger state (trigger state). If all bits in the indication field are set to 0, it indicates that CSI is not triggered, to be specific, CSI measurement and feedback are not performed. Another state, for example, 01, corresponds to one trigger state from the configured trigger state set. The trigger state set is configured through a "CSI-AperiodicTriggerStateList". For example, one trigger state list (trigger state list) may be configured through an IE. The list includes a plurality of trigger states, each trigger state is associated with one CSI set, and one CSI set includes a plurality of pieces of CSI-AssociatedReportConfigInfo. Each piece of CSI-AssociatedReportConfigInfo in one CSI set is associated with a specific CSI-RS reporting configuration identifier and a channel/interference measurement resource.

b. A trigger method for the SP-CSI

A DCI indication field includes a "CSI request", which indicates one trigger state. A difference between the trigger method for the SP-CSI and the trigger method for the A-CSI: If all bits in the indication field are set to 0, it indicates that a first trigger state in the trigger state set is triggered. The trigger state set is configured through a CSI-SemiPersistentOn-PUSCH-TriggerStateList. One trigger state is associated with one CSI-RS reporting configuration identifier.

5. Slot (slot)

A format of a slot may include several orthogonal frequency division multiplexing (orthogonal frequency division multiplexing, OFDM) symbols. For example, a format of a slot may include 14 OFDM symbols, or a format of a slot may include 12 OFDM symbols; or a format of a slot includes seven OFDM symbols. All OFDM symbols in one slot may be used for uplink transmission; and may be used for downlink transmission; and some may be used for downlink transmission, some may be used for uplink transmission, and some are flexible time domain symbols (which may be flexibly configured to be used for uplink or downlink transmission). It should be understood that the foregoing examples are merely examples for description, and shall not constitute any limitation on this application. In consideration of system forward compatibility, a quantity of OFDM symbols included in the slot and the slot being used for uplink transmission and/or downlink transmission are not limited to the foregoing examples. In this application, a time domain symbol may be an OFDM symbol, to be specific, the time domain symbol may be replaced with the OFDM symbol.

6. Time unit

One time unit (which may also be referred to as a time domain unit) may be one time domain symbol or several time domain symbols, or one mini-slot (mini-slot), or one slot, or one sub-slot (sub-slot), or one subframe (subframe). Duration of one subframe in time domain may be 1 millisecond (ms), one slot may include 7 or 14 time domain symbols, and one mini-slot may include at least one time domain symbol (for example, 2 time domain symbols, 7 time domain symbols, 14 time domain symbols, or any quantity of symbols less than or equal to 14 time domain symbols). Sizes of the foregoing time units are merely listed for ease of understanding the solutions in this application, and should not be understood as a limitation on this application. It may be understood that the sizes of the foregoing time units may be other values, and this is not limited in this application.

The time unit may include a time domain unit such as a radio frame (radio frame), a subframe, a slot, a mini-slot, a sub-slot, or an uplink symbol (symbol). In 5G NR, an uplink time domain symbol may be referred to as an uplink symbol for short. A time domain length of one radio frame is 10 ms. One radio frame may include 10 radio subframes, and a time domain length of one radio subframe is 1 ms. One radio subframe may include one or more slots. Specifically, a quantity of slots included in one subframe is related to a subcarrier spacing. When a subcarrier spacing (subcarrier spacing, SCS) is 15 kHz, a time domain length of one slot is 1 ms. One slot includes 14 orthogonal frequency division multiplexing (orthogonal frequency division multiplexing, OFDM) uplink symbols.

7. Control resource set (control resource set, CORESET)

The terminal device may search for and detect a PDCCH in one time-frequency resource set. The time-frequency resource set for detecting the PDCCH is configured through the network device. For example, the network device may configure the time-frequency resource set (CORESET) for the terminal device through one information element (information element, IE). In an implementation, one time-frequency resource set pool index is configured for one time-frequency resource set, and a time-frequency resource set corresponding to a same time-frequency resource set pool index may be grouped into one time-frequency resource set pool. It is generally considered that one time-frequency resource set pool corresponds to one TRP.

For example, it is assumed that the network device configures three time-frequency resource sets for the terminal device: a CORESET 0, a CORESET 1, and a CORESET 2. The CORESET 0 and the CORESET 1 are associated with coresetPoolIndex=0, and the CORESET 2 is associated with coresetPoolIndex=1. In this case, the CORESET 0 and the CORESET 1 form a group, and the CORESET 2 forms a group. In other words, the CORESET 0 and the CORESET 1 belong to a time-frequency resource set pool 0, and the CORESET 2 belongs to a time-frequency resource set pool 1.

8. Outer loop link adaptation (outer loop link adaptation, OLLA)

An OLLA technology is a technology to overcome time-varying characteristics of a radio channel and improve performance of a system.

By using the OLLA technology, the network device may perform link adaptation adjustment based on an ACK or a NACK corresponding to the downlink data fed back by the terminal device, to be specific, adjust a parameter used for scheduling data, for example, a signal-to-noise ratio (signal-to-noise ratio, SNR). The network device determines a corresponding modulation and coding scheme (modulation and coding scheme, MCS) based on the adjusted SNR, and schedules data by using the MCS, to track a current state of the channel to schedule data.

Specifically, how to adjust, based on the ACK or the NACK, the parameter used for scheduling data may have different implementations for different parameters. For example, an example in which the parameter is the SNR is used, and the network device may determine the SNR by using the following Formula (1):

$$SNR(i) = SNR_{CQI} + \Delta_{offset}(i) \quad (1)$$

SNR(i) represents the SNR used by the network device in scheduling data for the $i^{th}$ time, and the SNR used in scheduling data for the $i^{th}$ time may also be understood as an SNR used in scheduling data currently, and SNR(i - 1) represents an SNR used in scheduling data for an $(i-1)^{th}$ time or represents an SNR used in scheduling data last time. $SNR_{CQI}$ represents an SNR determined by the network device based on a channel state fed back by the terminal device, for example, channel quality information (channel quality information, CQI). $\Delta_{offset}(i)$ represents the $i^{th}$ time of OLLA adjustment amount, which meets the following Formula (2):

$$with \Delta_{offset}(i) = min\{\Delta_{offset}(i - 1) + \delta \cdot 1_{ACK} - 9\delta \cdot 1_{NACK}, offset_{max}\} \quad (2)$$

$\Delta_{offset}(i - 1)$ represents the $(i - 1)^{th}$ time of OLLA adjustment amount, and $\delta$ represents a step. The network device may preset the step based on an actual requirement. A larger step represents a larger step for adjusting the SNR each time. $offset_{max}$ represents the OLLA adjustment amount, and the adjustment amount is a maximum value set by the system. $1_{ACK}$ and $1_{NACK}$ have different values in different cases. For example, if the network device receives the ACK, $1_{ACK}$ is 1, and $1_{NACK}$ is 0. If the network device receives the NACK, $1_{ACK}$ is 0, and $1_{NACK}$ is 1.

For example, it is assumed that $SNR_{CQI}$=20 dB, $\delta$=1 dB, and $\Delta_{offset}(1)$=0.

When the network device transmits downlink data for the first time, SNR(1) of the scheduled data=$SNR_{CQI}$=20 dB.

The terminal device receives and decodes the downlink data, and feeds back the ACK to the network device if the decoding is correct.

When the network device transmits the downlink data for the second time, SNR(2) of the scheduled data is 21 dB.

The terminal device receives and decodes the downlink data, and feeds back the ACK to the network device if the decoding is correct.

When the network device transmits the downlink data for the third time, SNR(3) of the scheduled data is 22 dB.

The terminal device receives and decodes the downlink data, and feeds back the NACK to the network device if the decoding fails.

When the network device transmits the downlink data for the fourth time, SNR(4) of the scheduled data is 13 dB.

It may be learned from the foregoing that $\Delta_{offset}(i)$ is determined based on the ACK or the NACK fed back by the terminal device. Because $SNR_{CQI}$ may be inaccurate, the network device adjusts, based on an actual transmission condition of the channel, the SNR used by the scheduled data. If the data transmitted last time is correctly decoded, it indicates that $SNR_{CQI}$ may be lower than the SNR during actual data transmission. Therefore, the SNR may be increased a little during data scheduling this time, to track a change in a channel state well. For example, when the foregoing network device transmits the downlink data for the second time, $SNR_{CQI}$ is 20 dB, but SNR(2) of the actual scheduled data is 21 dB.

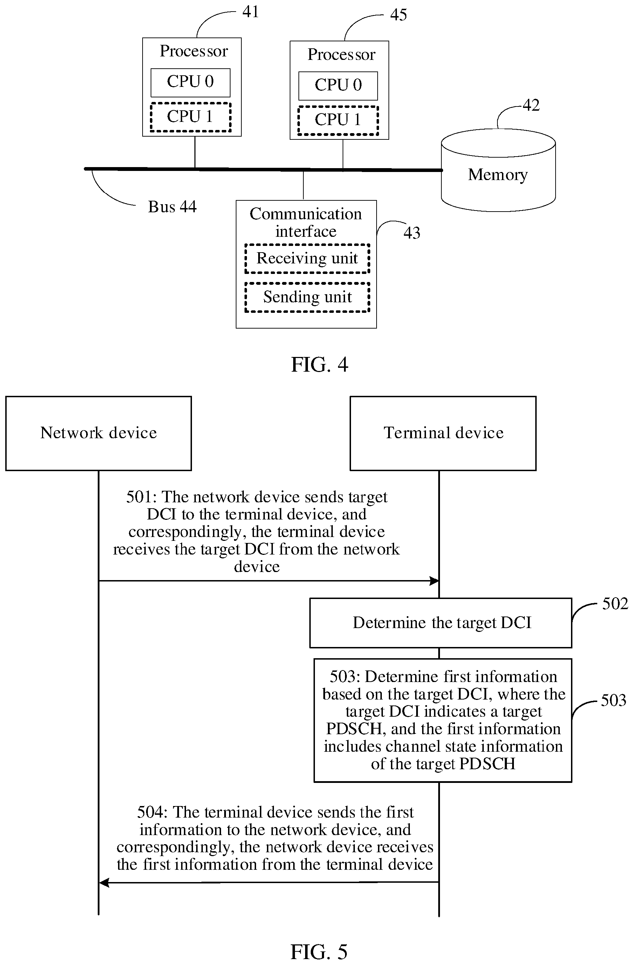

Basic hardware structures of the access network device, the core network device, and the terminal device are similar, and all include elements included in the communication apparatus shown in FIG. 4. The following describes the hardware structures of the access network device, the core network device, and the terminal device by using the communication apparatus shown in FIG. 4 as an example.

As shown in FIG. 4, the communication apparatus may include a processor 41, a memory 42, a communication interface 43, and a bus 44. The processor 41, the memory 42, and the communication interface 43 may be connected through the bus 44.

As shown in FIG. 4, the communication apparatus may include a processor 41, a memory 42, a communication interface 43, and a bus 44. The processor 41, the memory 42, and the communication interface 43 may be connected through the bus 44.

The processor 41 is a control center of the communication apparatus, and may be one processor or may be a collective name of a plurality of processing elements. For example, the processor 41 may be a general-purpose central processing unit (central processing unit, CPU), or may be another general-purpose processor. The general-purpose processor may be a microprocessor, any conventional processor, or the like.

In an embodiment, the processor 41 may include one or more CPUs, for example, a CPU 0 and a CPU 1 shown in FIG. 4.

In an embodiment, the communication apparatus may include a plurality of processors, for example, the processor 41 and the processor 45 shown in FIG. 4. Each of the processors may be a single-core processor (single-CPU) or may be a multi-core processor (multi-CPU). The processor herein may be one or more devices, circuits, and/or processing cores configured to process data (for example, computer instructions).

The memory 42 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a magnetic disk storage medium or another magnetic storage device, or any other medium capable of carrying or storing expected program code in a form of an instruction or data structure and capable of being accessed by a computer, but is not limited thereto.

In a possible implementation, the memory 42 may exist independently of the processor 41. The memory 42 may be connected to the processor 41 through the bus 44, and is configured to store instructions or program code. When invoking and executing the instructions or the program code stored in the memory 42, the processor 41 may implement the communication method provided in the following embodiments of this application.

In another possible implementation, the memory 42 may alternatively be integrated with the processor 41.

The communication interface 43 is configured to connect the communication apparatus to another device through a communication network. The communication network may be an Ethernet, a RAN, a wireless local area network (wireless local area networks, WLAN), or the like. The communication interface 43 may include a receiving unit configured to receive data and a sending unit configured to send data.

The bus 44 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 4, but this does not mean that there is only one bus or only one type of bus.

It should be noted that a structure shown in FIG. 4 does not constitute a limitation on the communication apparatus. In addition to the components shown in FIG. 4, the communication apparatus may include more or fewer components than those shown in the figure, or combine some components, or have different component arrangements.

Based on the foregoing descriptions of structures of the communication system and the communication apparatus, embodiments of this application provide a communication method. The following describes the communication method provided in embodiments of this application with reference to the accompanying drawings.

As shown in FIG. 5, the communication method may include the following step 501 to step 504. 501. A network device sends target DCI to a terminal device, and correspondingly, the terminal device receives the target DCI from the network device.

Specifically, the target DCI belongs to one first DCI set, and the first DCI set may include only one piece of downlink control information, or may include a plurality of pieces of downlink control information. When the first DCI set includes only one piece of DCI, first DCI is the target DCI; and when the first DCI set includes a plurality of pieces of downlink control information, the target DCI is one piece of DCI in the first DCI set.

In a possible implementation, the first DCI set is determined through a preconfigured time window. The preconfigured time window may be predefined, or may be indicated by the network device to the terminal device through signaling. DCI in the time window belongs to the first DCI set, or a PDSCH in the time window belongs to a first PDSCH set. The first DCI set is associated with the first PDSCH set. For example, an association relationship may be: DCI for scheduling a PDSCH in the first PDSCH set belongs to the first DCI set, or a PDSCH scheduled by DCI in the first DCI set belongs to the first PDSCH set.

In a possible implementation, the first DCI set is determined through a preconfigured periodicity (T). A time unit set may be determined based on the periodicity, and DCI sent in the time unit set belongs to the first DCI set. Alternatively, a PDSCH sent in the time unit set belongs to the first PDSCH set, and the first DCI set is associated with the first PDSCH set. For example, the association relationship may be that DCI for scheduling a PDSCH in the first PDSCH set belongs to the first DCI set, or a PDSCH scheduled by DCI in the first DCI set belongs to the first PDSCH set.

The time unit may be one time domain symbol or several time domain symbols, or a mini-slot, or a slot, or a sub-slot, or a subframe. This is not limited in this application.

For example, an example in which the time unit is a slot is used. It is assumed that the periodicity T is five slots, a slot 0, a slot 5, a slot 10, and the like may be determined as the time unit set. DCI sent in the slot 0, the slot 5, and the slot 10 forms the first DCI set.

For another example, based on the periodicity T, offset (offset) information may be further configured. The terminal device determines the time unit set through the periodicity and an offset, and the DCI sent in the time unit set belongs to the first DCI set. Alternatively, a PDSCH sent in the time unit set belongs to the first PDSCH set, and the first DCI set is associated with the first PDSCH set. For example, the association relationship may be that DCI for scheduling a PDSCH in the first PDSCH set belongs to the first DCI set, or a PDSCH scheduled by DCI in the first DCI set belongs to the first PDSCH set. For example, if the periodicity T is five slots, and the offset is one slot, it may be determined that a slot 1, a slot 6, a slot 11, and the like are the time unit set. DCI sent in the slot 1, the slot 6, and the slot 11 forms the first DCI set.

For another example, one time period X may be further configured. Based on the time unit set determined by the periodicity and/or the offset, one time unit subset may be further determined through a time period. In other words, in the time unit set determined by the periodicity and/or the offset, time units that are also located in the time period X are the time unit subset, and the DCI sent in the time unit subset belongs to the first DCI set. Alternatively, the PDSCH sent in the time unit subset belongs to the first PDSCH set, and the first DCI set is associated with the first PDSCH set. For example, the association relationship may be that DCI for scheduling a PDSCH in the first PDSCH set belongs to the first DCI set, or a PDSCH scheduled by DCI in the first DCI set belongs to the first PDSCH set.

For example, when the time period X is any one of 11, 12, 13, 14, and 15, if the time unit set is a slot 1, a slot 6, a slot 11, a slot 16, a slot 21, and the like, with reference to the time period, one time unit subset that is the slot 1, the slot 6, and the slot 11 may be obtained. Therefore, the DCI sent in the slot 1, the slot 6, and the slot 11 is the first DCI set, or the PDSCH sent in the slot 1, the slot 6, and the slot 11 is the first PDSCH set. The first DCI set is associated with the first PDSCH set.

For another example, one quantity Y of time units may be further configured. Based on the time unit set determined by the periodicity and/or the offset, one time unit subset may be further determined through the quantity Y of time units. In other words, in a time unit set determined by the periodicity and/or the offset, Y time units are the time unit subset, and the DCI sent in the time unit subset belongs to the first DCI set. Alternatively, the PDSCH sent in the time unit subset belongs to the first PDSCH set, and the first DCI set is associated with the first PDSCH set. For example, the association relationship may be that DCI for scheduling a PDSCH in the first PDSCH set belongs to the first DCI set, or a PDSCH scheduled by DCI in the first DCI set belongs to the first PDSCH set.

For example, the quantity Y of time units is 3. In this case, if the time unit set is a slot 1, a slot 6, a slot 11, a slot 16, a slot 21, and the like, with reference to the time period, one time unit subset that is the slot 1, the slot 6, and the slot 11 may be obtained. Therefore, the DCI sent in the slot 1, the slot 6, and the slot 11 is the first DCI set, or the PDSCH sent in the slot 1, the slot 6, and the slot 11 is the first PDSCH set. The first DCI set is associated with the first PDSCH set.

In addition, with reference to another method, the first DCI set is further determined through the time window, the periodicity, the offset, and the time period. This is not limited in this application. For example, in the foregoing method, it may be further specified that the first DCI set includes the DCI determined under the foregoing condition and existing before a time point.

The DCI or the PDSCH in the time window or the time unit set may be dynamically scheduled, or may be semi-persistently scheduled, or may be both dynamically scheduled and semi-persistently scheduled.

In a possible implementation, when performing dynamic scheduling, the network device may send, to the terminal device, the first DCI for scheduling one PDSCH or the first DCI set for scheduling a plurality of PDSCHs.

Optionally, during semi-persistent scheduling, the network device may determine the plurality of PDSCHs as one PDSCH set by activating DCI used for semi-persistent scheduling.

Optionally, the first DCI set may be determined based on a time unit in which feedback information of the plurality of PDSCHs is located. Alternatively, it may be understood that the plurality of PDSCHs whose feedback information is located in a same time unit may be determined as a first PDSCH set, and DCI used for scheduling at least two PDSCHs in the first PDSCH set is determined as the first DCI set. Further, optionally, the feedback information of the plurality of PDSCHs may be ACK/NACK feedback information. Optionally, the first DCI set may be determined based on a time unit in which feedback information of the plurality of PDSCHs is located. Alternatively, it may be understood that the plurality of PDSCHs whose feedback information is located in a same time unit may be determined as the first PDSCH set, and DCI for scheduling one PDSCH in the first PDSCH set is determined as the first DCI set. Further, optionally, the feedback information of the plurality of PDSCHs may be ACK/NACK feedback information.

The first DCI set may be determined based on a time unit in which the ACK/NACK of the plurality of PDSCHs is located. Further, optionally, ACK/NACK feedback information corresponding to scheduled downlink data in the first DCI set is located in a same time unit. For example, the network device sends five pieces of DCI, which are DCI 1, DCI 2, DCI 3, DCI 4, and DCI 5 respectively, and each piece of DCI schedules one PDSCH, which is a PDSCH 1, a PDSCH 2, a PDSCH 3, a PDSCH 4, and a PDSCH 5 respectively. ACK/NACK feedback information corresponding to the PDSCH 1, the PDSCH 3, and the PDSCH 5 is fed back in the time unit 1, and ACK/NACK feedback information corresponding to the PDSCH 2 and the PDSCH 4 is fed back in the time unit 2. Therefore, the DCI 1, the DCI 3, and the DCI 5 belong to the first DCI set. Optionally, at least two PDSCHs corresponding to the ACK/NACK feedback information located in one time unit (for example, a first time unit) belong to the first PDSCH set. It may be understood that the at least two PDSCHs corresponding to the ACK/NACK in one time unit belong to the first PDSCH set, and the first PDSCH set includes only a PDSCH whose ACK/NACK feedback information is located in one time unit, or the first PDSCH set includes a PDSCH whose ACK/NACK feedback information is located in one time unit, and further includes another PDSCH. In other words, in this case, ACK/NACK feedback information of some PDSCHs in the first PDSCH set is in a same time unit. The first PDSCH set further includes another PDSCH, and may be determined in another manner. This is not limited herein.

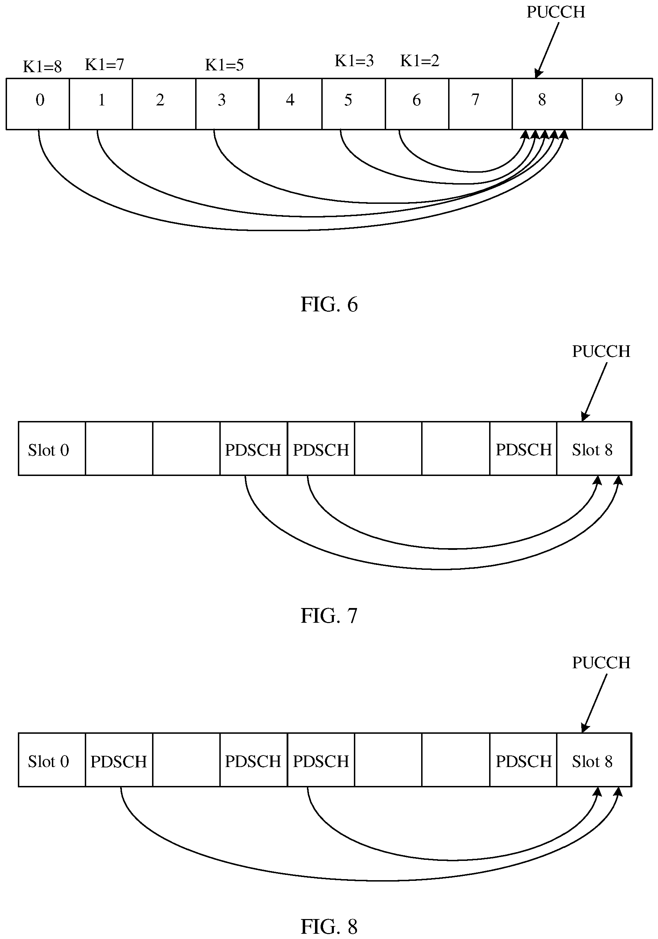

For example, it is assumed that the time unit is a slot, as shown in FIG. 6, five ACKs/NACKs located in an eighth slot correspond to five PDSCHs in slots 0, 1, 3, 5, and 6, and the first PDSCH set includes the five PDSCHs.

For another example, it is assumed that the time unit is a slot, and two ACKs are located in an eighth slot. As shown in FIG. 7, PDSCHs corresponding to the two ACKs are respectively located in a third slot and a fourth slot. The first PDSCH set may include three PDSCHs located in the third slot, the fourth slot, and a seventh slot. As shown in FIG. 8, PDSCHs corresponding to two ACKs are respectively located in a first slot and a fourth slot, and a first PDSCH set includes three PDSCHs located in a third slot, the fourth slot, and a seventh slot.

After the first PDSCH set is determined, the first DCI set may be determined based on the first PDSCH set. In other words, DCI for scheduling a PDSCH in the first PDSCH set belongs to the first DCI set, or a PDSCH scheduled by DCI in the first DCI set belongs to the first PDSCH set.

It may be understood that the first PDSCH set has an association relationship with the first DCI set. In other words, DCI for scheduling a PDSCH in the first PDSCH set belongs to the first DCI set, or a PDSCH scheduled by DCI in the first DCI set belongs to the first PDSCH set. There may be the following relationship.

All PDSCHs in the first PDSCH set are associated with all pieces of DCI in the first DCI set. For example, the first PDSCH set includes five PDSCHs, the first DCI set includes five pieces of DCI, and one piece of DCI is used to schedule one PDSCH.

Alternatively, some PDSCHs in the first PDSCH set are associated with all pieces of DCI in the first DCI set. For example, the first PDSCH includes five PDSCHs, two PDSCHs of the five PDSCHs are separately scheduled by two pieces of DCI, the other three PDSCHs may be PDSCHs in semi-persistent scheduling, and the first DCI set may include the two pieces of DCI.

Alternatively, all PDSCHs in the first PDSCH set are associated with some pieces of DCI in the first DCI set. For example, the first PDSCH includes five PDSCHs, and each of the five PDSCHs is scheduled by using the DCI. There may be five pieces of DCI, and the first DCI set may include: six or more pieces of DCI including the five pieces of DCI, where DCI other than the five pieces of DCI is used to schedule other data.

Optionally, the first PDSCH set may be determined through second DCI, where the second DCI indicates a time-frequency resource used to feed back the ACK/NACK. The at least two PDSCHs corresponding to the ACK feedback information or the NACK feedback information fed back on the time-frequency resource may be determined as the first PDSCH set. Optionally, after the first PDSCH set is determined, the first DCI set may be determined based on the first PDSCH set. For an association relationship between the first PDSCH set and the first DCI set, refer to the foregoing description. Details are not described herein again.

Optionally, the first PDSCH set may be determined through the second DCI. The second DCI indicates a time-frequency resource used for a feedback information set. The feedback information set includes at least one piece of feedback information. At least one piece of feedback information in the feedback information set corresponds to a PDSCH in the first PDSCH set. The feedback information may be an ACK/NACK. Optionally, after the first PDSCH set is determined, the first DCI set may be determined based on the first PDSCH set. For an association relationship between the first PDSCH set and the first DCI set, refer to the foregoing description. Details are not described herein again. Optionally, the first DCI set includes third DCI. The third DCI indicates a second feedback information set. The second feedback information set includes at least one piece of feedback information. A PDSCH corresponding to the at least one piece of feedback information included in the second feedback information set belongs to the first PDSCH set.

Further, optionally, PDSCHs corresponding to all feedback information included in the second feedback information set belong to the first PDSCH set.

The DCI in the first DCI set or the PDSCH in the first PDSCH set may be dynamically scheduled, or may be semi-persistently scheduled, or may be both dynamically scheduled and semi-persistently scheduled.

It should be noted that in embodiments of this application, in addition to the plurality of implementations described above, the association relationship between the first PDSCH set and the first DCI set may be further configured through higher layer information, predefined, or specified in a protocol, or may be another manner in implementing the association relationship. This is not limited in embodiments of this application.

502. The terminal device determines target DCI.

Specifically, when the first DCI is one piece of downlink control information, the first DCI is the target DCI. When the first DCI is a plurality of pieces of downlink control information, to be specific, in step 501, the network device sends the first DCI set, and the terminal device determines the target DCI in the first DCI set.

For the first DCI set, the terminal device may determine the target DCI from the first DCI set according to a preset rule. Optionally, the preset rule may be a rule in a frequency domain dimension, a time dimension, a TRP dimension, or a combination of at least two of a frequency domain dimension, a time dimension, and a TRP dimension.

Optionally, the target DCI is DCI that is sorted in the first DCI set based on any one of the time dimension, the frequency domain dimension, or the TRP dimension and that meets the following condition: The target DCI is DCI in which time is in the last, or the target DCI is DCI in which frequency domain is in the last, or the target DCI is DCI in which a TRP is in the last. Alternatively, the target DCI is DCI that is in the first DCI set and that is sorted based on a combination of at least two of a time dimension, a frequency domain dimension, and a TRP dimension and that meets the following condition: The target DCI is DCI in which time is in the last and frequency domain is in the last, or the target DCI is DCI in which a TRP is in the last and frequency domain is in the last, or the target DCI is DCI in which a TRP is in the last and time is in the last, or the target DCI is DCI in which time is in the last, frequency domain is in the last, and a TRP is in the last. The time in the last may also be understood as a last index of the time units obtained after indexes of the time units are sorted in ascending or descending order, or a last moment of DCI detection moments obtained after the DCI detection moments are sorted in ascending or descending order. Frequency domain in the last may also be understood as a last index of frequency domain units obtained after the indexes of the frequency domain units are sorted in ascending or descending order. The TRP in the last may also be understood as a last time-frequency resource set pool index obtained after the time-frequency resource set pool indexes are sorted in ascending or descending order.

Manner 1: When the preset rule is a rule in the frequency domain dimension, the preset rule may be that the target DCI is an $N^{th}$ piece of DCI in the first DCI set that is obtained after indexes of the frequency domain unit are sorted in ascending or descending order, where N is a positive integer. For example, when N is 1, the target DCI is the first piece of DCI in the first DCI set that is obtained after indexes of the frequency domain unit are sorted in ascending or descending order. For another example, when N is the same as a quantity of pieces of DCI included in the first DCI set, the target DCI is a last piece of DCI in the first DCI set that is obtained after indexes of the frequency domain unit are sorted in ascending or descending order. The frequency domain unit may be a cell, a carrier (carrier), a bandwidth part (bandwidth part, BWP), or the like. This is not limited in this application.

Manner 2: When the preset rule is a rule in the time dimension, the preset rule may be that the target DCI is an $N^{th}$ piece of DCI in the first DCI set that is obtained after indexes of a time unit are sorted in ascending or descending order, where N is a positive integer. The ascending order of the indexes of the time unit may also be understood as ascending order of time, and the descending order of the indexes of the time unit may also be understood as descending order of time. For example, when N is 1, the target DCI is the first piece of DCI in the first DCI set that is obtained after the indexes of the time unit are sorted in ascending or descending order. For another example, when N is the same as a quantity of pieces of DCI included in the first DCI set, the target DCI is a last piece of DCI in the first DCI set that is obtained after the indexes of the time unit are sorted in ascending or descending order. The time unit may be a system frame, a subframe, a slot, an OFDM symbol, or the like. This is not limited in this application. Alternatively, the preset rule may be that: The target DCI is the $N^{th}$ piece of DCI in the first DCI set that is obtained after DCI detection moments are sorted in ascending or descending order, where N is a positive integer. The ascending order of the DCI detection moment may also be understood as ascending order of time, and the descending order of the DCI detection moment may also be understood as descending order of time. For example, when N is 1, the target DCI is the first piece of DCI in the first DCI set that is obtained after DCI detection moments are sorted in ascending or descending order. For another example, when N is the same as a quantity of pieces of DCI included in the first DCI set, the target DCI is a last piece of DCI in the first DCI set that is obtained after the DCI detection moments are sorted in ascending or descending order. The DCI detection moment may be a start moment of a time-frequency resource corresponding to the DCI, or may be an end moment of a time-frequency resource corresponding to the DCI.

Manner 3: When the preset rule is a rule in the TRP dimension, the preset rule may be that the target DCI is an $N^{th}$ piece of DCI in the first DCI set that is obtained after time-frequency resource set pool indexes are sorted in ascending or descending order, where N is a positive integer. For example, when N is 1, the target DCI is the first piece of DCI in the first DCI set that is obtained after the time-frequency resource set pool indexes are sorted in ascending or descending order. For another example, when N is the same as a quantity of pieces of DCI included in the first DCI set, the target DCI is a last piece of DCI in the first DCI set that is obtained after the time-frequency resource set pool indexes are sorted in ascending or descending order.

There may be one preset rule, for example, any rule of any dimension in the foregoing three manners, or there may be a plurality of preset rules. Further, optionally, when there are a plurality of preset rules, the plurality of preset rules may be a combination of at least two rules of at least two dimensions in the foregoing three manners.

Example 1: When the preset rule is a rule in the time dimension and the frequency domain dimension, the preset rule may be that the target DCI is the $N^{th}$ piece of DCI in the first DCI set that is obtained after all pieces of DCI are sorted first based on the time dimension and then the frequency domain dimension, where N is a positive integer. The time dimension may be a manner in which the indexes of the time unit are sorted in ascending or descending order in the first DCI set, or a manner in which the DCI detection moments are sorted in ascending or descending order in the first DCI set. The frequency domain dimension may be a manner in which the indexes of the frequency domain unit are sorted in ascending or descending order in the first DCI set. The ascending order of the DCI detection moment may also be understood as ascending order of time, and the descending order of the DCI detection moment may also be understood as descending order of time. Any time dimension and any frequency domain dimension may be combined as a preset rule. This is not limited in embodiments of this application. For example, when N is 1, if the preset rule is that the first DCI set is sorted first based on the time dimension and then based on the frequency domain dimension, the target DCI is first piece of DCI in the first DCI set that is obtained after the indexes of the time unit are sorted in ascending or descending order, and after indexes of the frequency domain unit in a same time unit are sorted in ascending or descending order. Alternatively, the target DCI is the first piece of DCI in the first DCI set that is obtained after the DCI detection moments are sorted in ascending or descending order, and after the indexes of the frequency domain unit at a same DCI detection moment are sorted in ascending or descending order. If the preset rule is that the first DCI set is sorted first based on the frequency domain dimension and then based on the time dimension, the target DCI is the first piece of DCI in the first DCI set that is obtained after the indexes of the frequency domain unit are sorted in ascending or descending order, and after the indexes of the time unit in a same frequency domain unit are sorted in ascending or descending order. Alternatively, the target DCI is the first piece of DCI in the first DCI set that is obtained after the indexes of the frequency domain unit are sorted in ascending or descending order, and after the DCI detection moments in a same frequency domain unit are sorted in ascending or descending order. For another example, when N is the same as a quantity of pieces of DCI included in the first DCI set, if the preset rule is that the first DCI set is sorted first based on the time dimension and then based on the frequency domain dimension, the target DCI is a last piece of DCI in the first DCI set that is obtained after the indexes of the time unit are sorted in ascending or descending order, and after the indexes of the frequency domain unit in a same time unit are sorted in ascending or descending order. Alternatively, the target DCI is the last piece of DCI in the first DCI set that is obtained after the DCI detection moments are sorted in ascending or descending order, and after the indexes of the frequency domain unit at a same DCI detection moment are sorted in ascending or descending order. If the preset rule is that the first DCI set is sorted first based on the frequency domain dimension and then based on the time dimension, the target DCI is the last piece of DCI in the first DCI set that is obtained after the indexes of the frequency domain unit are sorted in ascending or descending order, and after the indexes of the time unit in a same frequency domain unit are sorted in ascending or descending order. Alternatively, the target DCI is the last piece of DCI in the first DCI set that is obtained after the indexes of the frequency domain unit are sorted in ascending or descending order, and after the DCI detection moments in a same frequency domain unit are sorted in ascending or descending order.

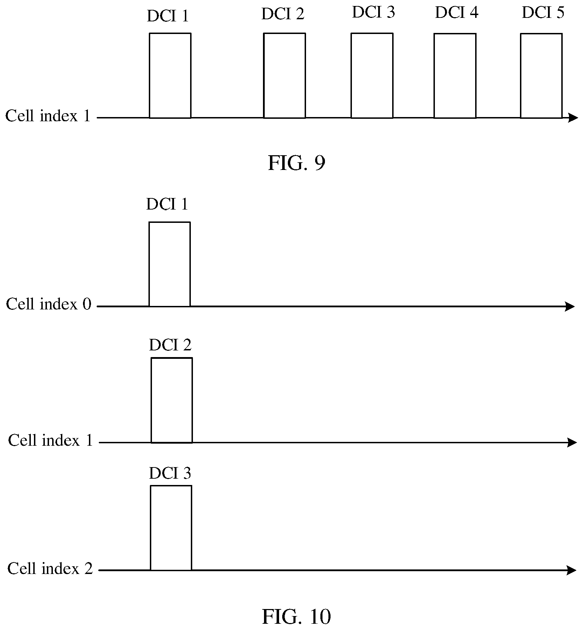

Example 2: The preset rule may be in a time dimension. For example, as shown in FIG. 9, a cell index corresponding to a cell 1 is 1. The first DCI set includes five pieces of DCI, to be specific, the terminal device located in the cell 1 receives five pieces of DCI at five different moments. The five pieces of DCI are sorted in time sequence as follows: DCI 1, DCI 2, DCI 3, DCI 4, and DCI 5. The time point herein may be a time point at which the network device sends the DCI, or may be a time point at which the terminal device receives the DCI. This is not limited herein. Specifically, an example in which the terminal device receives the DCI is used. The time point herein may be a start moment at which the DCI is detected, or may be an end moment at which the DCI is detected. For another example, an example in which the terminal device sends the DCI is used. The time point herein may be a start moment at which the DCI is sent, or may be an end moment at which the DCI is sent.

If the preset rule is that the target DCI is the first piece of DCI in the first DCI set that is obtained after sorting is performed based on a time sequence, the target DCI is the DCI 1.

If the preset rule is that the target DCI is the last piece of DCI in the first DCI set that is obtained after sorting is performed based on a time sequence, the target DCI is the DCI 5.

If the preset rule is that the target DCI is the $N^{th}$ piece of DCI in the first DCI set that is obtained after sorting is performed based on a time sequence, where N is an $N^{th}$ piece of DCI in a positive order or in a reverse order. An example in which N is 2 is used. When the target DCI is a second piece of DCI in a positive order in the first DCI set that is obtained after sorting is performed based on a time sequence, the target DCI is the DCI 2. When the target DCI is a second piece of DCI in a reverse order in the first DCI set that is obtained after sorting is performed based on a time sequence, the target DCI is the DCI 4.

Optionally, an application scenario of Example 2 may be a single-TRP and single-cell scenario. In this case, all pieces of DCI received by the terminal device belongs to one cell. The frequency domain dimension may not be considered in the preset rule.

Example 3: The preset rule may be in a time dimension and a frequency domain dimension. Optionally, the preset rule may be: The target DCI is the first DCI or the last DCI that is obtained after all pieces of DCI in the first DCI set are sorted first based on the time dimension and then the frequency domain dimension. The time dimension may be in ascending order of time or in descending order of time, and the frequency domain dimension may be in ascending order of cell indexes or in descending order of cell indexes, namely, in ascending order of cell indexes or in descending order of cell indexes. Any time dimension and any cell index dimension may be combined as a preset rule. This is not limited in this application. Specifically, the preset rule may be that the target DCI is the first piece of DCI or the last piece of DCI that is obtained after all pieces of DCI in the first DCI set are first sorted in ascending order of time, and then cells in which DCI at each time point is located are sorted in ascending order of cell indexes. Alternatively, the preset rule may be that the target DCI is the first piece of DCI or the last piece of DCI that is obtained after all pieces of DCI in the first DCI set are first sorted in ascending order of time, and then cells in which DCI at each time point is located are sorted in descending order of cell indexes. Alternatively, the preset rule may be that the target DCI is the first piece of DCI or the last piece of DCI that is obtained after all pieces of DCI in the first DCI set are first sorted in descending order of time, and then cells in which DCI at each time point is located are sorted in ascending order of cell indexes. Alternatively, the preset rule may be that the target DCI is the first piece of DCI or the last piece of DCI that is obtained after all pieces of DCI in the first DCI set are first sorted in descending order of time, and then cells in which DCI at each time point is located are sorted in descending order of cell indexes. Alternatively, the preset rule may be that the target DCI is the first piece of DCI or the last piece of DCI that is obtained after all pieces of DCI in the first DCI set are first sorted in ascending order of cell indexes, and then all pieces of DCI in each cell are sorted in ascending order of time. Alternatively, the preset rule may be that the target DCI is the first piece of DCI or the last piece of DCI that is obtained after all pieces of DCI in the first DCI set are first sorted in ascending order of cell indexes, and then all pieces of DCI in each cell are sorted in ascending order of time. Alternatively, the preset rule may be that the target DCI is the first piece of DCI or the last piece of DCI that is obtained after all pieces of DCI in the first DCI set are first sorted in descending order of cell indexes, and then all pieces of DCI in each cell are sorted in ascending order of time. Alternatively, the preset rule may be that the target DCI is the first piece of DCI or the last piece of DCI that is obtained after all pieces of DCI in the first DCI set are first sorted in descending order of cell indexes, and then all pieces of DCI in each cell are sorted in descending order of time. Optionally, the application scenario of Example 3 may be a single-TRP and multi-cell scenario. Because there is more than one cell, to distinguish between different cells, each cell in the plurality of cells correspond to one identifier, and the identifier may also be understood as a cell index. The time dimension and the frequency dimension need to be considered in the preset rule.

For example, as shown in FIG. 10, cell indexes corresponding to three cells are respectively: 0, 1, and 2. A first DCI set includes three pieces of DCI. It is assumed that terminal devices simultaneously located in three cells receive, at a same moment, three pieces of DCI located in the three cells. The three DCI pieces that are sorted in ascending order of cell indexes are: DCI 1, DCI 2, and DCI 3.

If the preset rule is that the target DCI is the first piece of DCI that is obtained after all pieces of DCI in the first DCI set are first sorted in ascending order of time, and then cells in which DCI at each time point is located are sorted in ascending order of cell indexes, the target DCI is the DCI 1.

If the preset rule is that the target DCI is the first piece of DCI that is obtained after all pieces of DCI in the first DCI set are first sorted in descending order of cell indexes, and then all pieces of DCI in each cell are sorted in descending order of time, the target DCI is the DCI 3.

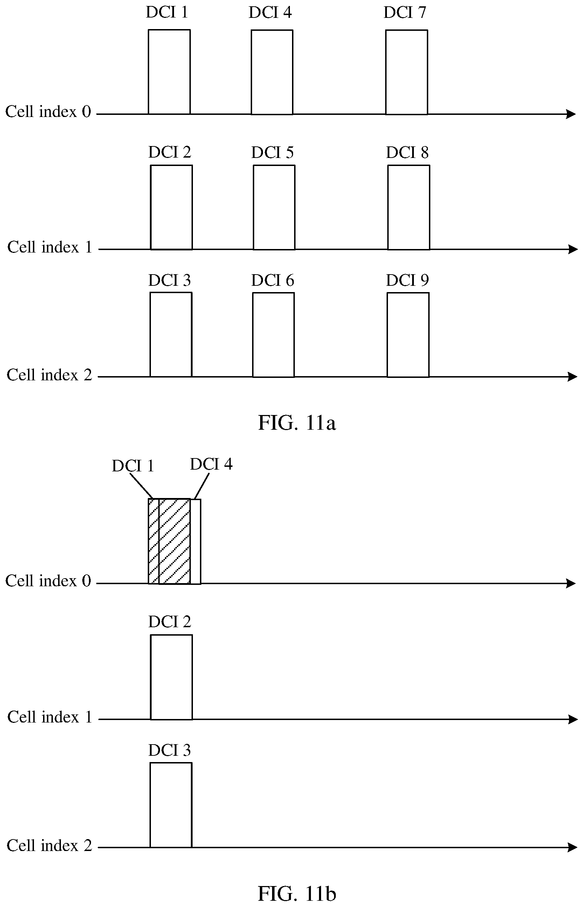

For another example, as shown in FIG. 11a, cell indexes corresponding to the three cells are respectively: 0, 1, and 2. The first DCI set includes nine pieces of DCI. It is assumed that terminal devices simultaneously located in the three cells receive, at each of the three moments, three pieces of DCI located in the three cells.

If the preset rule is that the target DCI is the first piece of DCI that is obtained after all pieces of DCI in the first DCI set are first sorted in ascending order of time, and then cells in which DCI at each time point is located are sorted in ascending order of cell indexes, a final sequence of the nine pieces of DCI is: DCI 1, DCI 2, DCI 3, DCI 4, DCI 5, DCI 6, DCI 7, DCI 8, and DCI 9, and the target DCI is the DCI 1.

If the preset rule is that the target DCI is the last piece of DCI that is obtained after all pieces of DCI in the first DCI set are first sorted in ascending order of cell indexes, and then all pieces of DCI in each cell are sorted in ascending order of time, a final sequence of the nine pieces of DCI is: DCI 1, DCI 4, DCI 7, DCI 2, DCI 5, DCI 8, DCI 3, DCI 6, and DCI 9, and the target DCI is the DCI 9.

If the preset rule is that the target DCI is the $N^{th}$ piece of DCI that is obtained after all pieces of DCI in the first DCI set are first sorted in ascending order of cell indexes, and then all pieces of DCI in each cell are sorted in ascending order of time. N is an $N^{th}$ piece of DCI in a positive order or in a reverse order. A final sequence of the nine pieces of DCI is: DCI 1, DCI 4, DCI 7, DCI 2, DCI 5, DCI 8, DCI 3, DCI 6, and DCI 9. An example in which N is 2 is used. When the second piece of DCI is the second piece of DCI in a positive order, the target DCI is the DCI 4. When the second piece of DCI is the second piece of DCI in a reverse order, the target DCI is the DCI 6. Example 4 In a multi-TRP scenario, because there is more than one TRP, to distinguish between different TRPs, each of the plurality of TRPs corresponds to one identifier, and the identifier may be a time-frequency resource set pool index. In this case, the preset rule may be that the target DCI is the $N^{th}$ piece of DCI that is obtained after all pieces of DCI in the first DCI set are first sorted based on a time dimension and a frequency domain dimension, and then all pieces of DCI in a same cell and at a same time point are sorted in ascending or descending order of time-frequency resource set pool indexes. N is a positive integer. Alternatively, the preset rule may be that the target DCI is the $N^{th}$ piece of DCI that is obtained after all pieces of DCI in the first DCI set are first sorted in ascending or descending order of time-frequency resource set pool indexes, and then, all pieces of DCI corresponding to each time-frequency resource set pool index are sorted based on the time dimension and the frequency domain dimension. For specific descriptions of sorting in the time dimension and the frequency domain dimension, refer to related descriptions in Example 2. Details are not described herein again.

For example, as shown in FIG. 11b, cell indexes corresponding to three cells are respectively: 0, 1, and 2. A first DCI set includes four pieces of DCI. It is assumed that terminal devices simultaneously located in three cells receive, at a same moment, four pieces of DCI located in the three cells. The terminal device receives, at a same moment, two pieces of DCI that are respectively the DCI 1 and the DCI 4 and that are located in a cell whose cell index is 0. The two pieces of DCI come from two TRPs, and respectively correspond to a time-frequency resource set pool index 0 and a time-frequency resource set pool index 1. In addition, it is assumed that the DCI 1, the DCI 2, and the DCI 3 correspond to a same TRP.

If the preset rule is that the target DCI is the first piece of DCI that is obtained after all pieces of DCI in the first DCI set are first sorted based on the time dimension and the frequency domain dimension, and then all pieces of DCI in a same cell and at a same time point are sorted in ascending order of time-frequency resource set pool indexes. If sorting that is performed based on the time dimension and the frequency domain dimension is sorting that is performed in ascending order of time, and then cells in which DCI at each time point is located are sorted in ascending order of cell indexes, a final sorting result of the four pieces of DCI is: DCI 1, DCI 4, DCI 2, and DCI 3, and the target DCI is the DCI 1.

If the preset rule is that the target DCI is the last piece of DCI that is obtained after all pieces of DCI in the first DCI set are first sorted in ascending order of time-frequency resource set pool indexes, and then all pieces of DCI corresponding to each time-frequency resource set pool index are sorted based on the time dimension and the frequency domain dimension. If sorting that is performed based on the time dimension and the frequency domain dimension is sorting that is performed in ascending order of time, and then cells in which DCI at each time point is located are sorted in ascending order of cell indexes, a final sorting result of the four pieces of DCI is: DCI 1, DCI 2, DCI 3, and DCI 4, and the target DCI is the DCI 4.

Optionally, the target DCI may be second DCI in step 501, and the second DCI indicates a location of a time domain resource of an ACK/NACK. Optionally, the second DCI belongs to the first DCI set. The second DCI is used to determine an ACK/NACK feedback resource corresponding to the first DCI set. For example, a PUCCH resource fed back by an ACK/NACK of a PDSCH corresponding to the first DCI set is determined through a PRI, and the PRI is carried in the second DCI.

Optionally, the target DCI may be third DCI in step 501, and the third DCI indicates a time-frequency resource of a second feedback information set. Further, optionally, the third DCI includes the PRI, and the PRI indicates a PUCCH resource carrying the second feedback information set.

503: The terminal device determines first information based on the target DCI, where the target DCI indicates a target PDSCH, and the first information includes channel state information of the target PDSCH.

Specifically, after determining the target DCI, the terminal device may obtain a time-frequency resource of the target PDSCH indicated by the target DCI, and determine the first information based on whether the target PDSCH is received on the time-frequency resource of the target PDSCH. The target PDSCH belongs to a first PDSCH set. A specific implementation of determining the first information by the terminal device is not limited herein in embodiments of this application. For a specific implementation of determining the first information, refer to content included in the first information.

Optionally, channel state information of the PDSCH may include at least one of the following: a soft-ACK, a cause of a target PDSCH decoding failure, an SNR-offset, an MCS-offset, or a target block error rate (target bler, BLER).

Soft-ACK: namely, a soft information value of a result obtained by decoding of a PDSCH. The soft-ACK is different from the ACK/NACK that is fed back in the conventional technology. Generally, one PDSCH corresponds to 1-bit information, and the 1-bit information is used to carry the ACK or the NACK. However, in the soft-ACK technology, a plurality of bits, for example, 2-bit information, are used, to carry a plurality of states. For example, 00 represents the NACK; 01 represents the ACK, but there is only a low probability that 01 is decoded as the ACK; and 10 represents the ACK, but there is a medium probability that 10 is decoded as the ACK, and 11 also represents the ACK, but there is a high probability that 11 is decoded as the ACK. 01, 10, and 11 represent that data is correctly decoded, but a receiving end may adjust the SNR by using the three states. 01 represents that although data transmission receiving is correctly performed this time (decoded as the ACK), there is a low probability that the decoding is correct. In other words, although the current data is correctly decoded, there is a high probability that the decoding is incorrect. Therefore, based on 01 that is fed back, when scheduling data next time, a base station may reduce the SNR. This ensures reliability of data transmission. 11 represents that the data is decoded correctly this time, and there is a high probability that the decoding is correct. In other words, robustness of this data transmission is very high. Therefore, when the base station adjusts the SNR of the scheduled data based on 11 fed back by the terminal device, the SNR may be increased. This improves resource utilization for data transmission.

A cause of a PDSCH decoding failure: A cause of a downlink data transmission decoding failure this time is fed back. For example, the cause may be that the MCS is too high, or may be a decoding failure caused by blocking;

and after receiving the information, the network device performs adjustment based on the information. For example, if the MCS is too high, the MCS may be reduced to ensure reliability.

SNR-offset: In essence, OLLA adds a $\triangle$_offset to an SNR determined by a CQI. Therefore, the terminal device may directly feed back the $\triangle$_offset based on a result obtained by decoding of a PDSCH this time. In this way, the network device does not need to perform adjustment based on the ACK/NACK.

MCS-offset: The terminal device feeds back an offset relative to the MCS transmission that is performed this time. For example, an MCS index corresponding to an MCS used for data transmission that is performed this time is 5, and MCS-offset =-1 may be fed back. In this case, when scheduling data next time, the network device may use an MCS corresponding to MCS index=4.

Target BLER: represents a target BLER corresponding to an SNR that is received by the PDSCH this time. For example, when the terminal device receives downlink data that is obtained this time, SNR=20 dB is detected. It is assumed that SNR=20 dB corresponds to target BLER=$10^{-6}$, the terminal device may feed back $10^{-6}$. Specific quantization is not limited in embodiments of this application. A correspondence between the SNR and the target BLER may be specified by the network device, predefined in a protocol, or determined by the terminal device based on self-implementation.

Optionally, the target DCI may directly indicate the target PDSCH. Alternatively, the target DCI may indicate the target PDSCH by indicating the target cell. The target cell is a cell in which the target PDSCH is located.

When the target DCI directly indicates the target PDSCH, the target PDSCH may be one or more PDSCHs in the first PDSCH set. In an implementation, the target DCI may indicate a location of the target PDSCH in the first PDSCH set. The PDSCHs in the first PDSCH set are sorted according to a preset rule. The target PDSCH may be an $N^{th}$ PDSCH that is obtained after the PDSCHs in the first PDSCH set are sorted according to the preset rule. The $N^{th}$ PDSCH may be an $N^{th}$ PDSCH in a positive order or in a reverse order.

It should be noted that the preset rule may be a sorting rule of DCI in the first DCI set, or a sorting rule of an ACK/NACK corresponding to all PDSCHs in the first PDSCH set. This is not limited in embodiments of this application. A sorting order of the ACK/NACK corresponding to all the PDSCHs in the first PDSCH set is specified by the network device or predefined in a protocol. The PDSCHs in the first PDSCH set are sorted according to a sorting rule of the DCI in the first DCI set, which is applicable to a scenario in which each PDSCH in the first PDSCH set corresponds to one piece of DCI in the first DCI set. For sorting of the DCI in the first DCI set, refer to the description in the foregoing embodiment. Details are not described herein again.

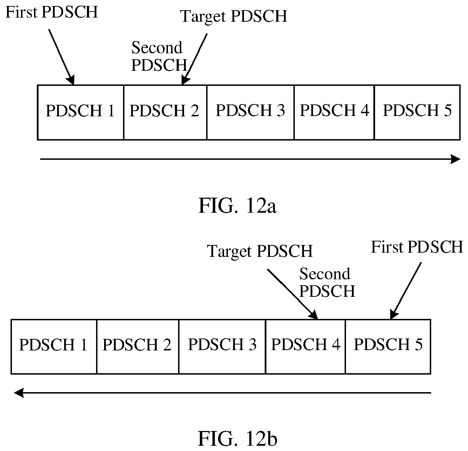

For example, it is assumed that the first PDSCH set includes five PDSCHs, and the five PDSCHs are sorted according to a preset rule: a PDSCH 1, a PDSCH 2, a PDSCH 3, a PDSCH 4, and a PDSCH 5. As shown in FIG. 12a, the target PDSCH is a second PDSCH in a positive order after five PDSCHs are sorted, to be specific, the target PDSCH is the PDSCH 2. As shown in FIG. 12b, the target PDSCH is a second PDSCH in a reverse order after five PDSCHs are sorted, to be specific, the target PDSCH is the PDSCH 4.

A beneficial effect of the $N^{th}$ PDSCH being the $N^{th}$ PDSCH in a reverse order is as follows: A quantity of PDSCHs corresponding to a first time unit dynamically changes, and a size of an indication field that indicates the target PDSCH in the DCI is semi-persistently configured. Therefore, a case that the quantity of PDSCHs indicated by the indication field is less than a total quantity of PDSCHs in the first PDSCH set is likely to occur. In this case, if the $N^{th}$ PDSCH is in a positive order, measurement based on a last PDSCH may not be indicated. However, the last PDSCH is relatively updated, and may provide more timely channel state information. Measurement may be performed based on the last PDSCH through the $N^{th}$ PDSCH in a reverse order.

Optionally, the target DCI indicates that the target PDSCH is the $N^{th}$ PDSCH in the first PDSCH set, and N may be configured by a higher layer or predefined in a protocol. For example, the target DCI may indicate two states. If the target DCI indicates a state 1, N is 1. If the target DCI indicates a state 2, N=5. A correspondence between the state indicated by the target DCI and N may be configured by higher layer signaling.

When the target DCI indicates the target cell, the target PDSCH is one or more PDSCHs in the first PDSCH set that are located in the target cell. Optionally, the target PDSCH may be a newly obtained PDSCH in the first PDSCH set that is located in the target cell. Alternatively, the target PDSCH may be all PDSCHs in the first PDSCH set that are located in the target cell. Alternatively, the target PDSCH is indicated by the network device through indication information, and the indication information indicates whether the target PDSCH is one or more PDSCHs in the first PDSCH set that are located in the target cell.

Optionally, the target PDSCH belongs to the first PDSCH set, and the target PDSCH may be one PDSCH, or may include a plurality of PDSCHs. Optionally, the target PDSCH may be a PDSCH in a PDSCH corresponding to an ACK/NACK in one time unit, or the target PDSCH may not be a PDSCH in a PDSCH corresponding to the ACK/NACK in one time unit. Alternatively, when the target PDSCH includes a plurality of PDSCHs, ACKs/NACKs of some PDSCHs in the plurality of PDSCHs are located in a same time unit, and other parts are not limited.

In an implementation, the first PDSCH set may further include one or more PDSCHs determined based on the target cell.

In an implementation, the first PDSCH set may be a PDSCH that is located in the target cell in PDSCHs received in a time unit within a preset time period before the first time unit. Alternatively, the first PDSCH set may be a PDSCH that is located in the target cell in PDSCHs received in a time unit within a preset time period before the second time unit. The second time unit may be any one of a time unit in which the PDSCH corresponding to the ACK/NACK in the first time unit is located. It may be understood that the first information includes the channel state information of the target PDSCH, or may be expressed as: The first information includes channel state information obtained based on the target PDSCH. Alternatively, the first information includes channel state information obtained based on the first PDSCH set. Alternatively, the first information includes channel state information corresponding to the target PDSCH. Alternatively, the first information includes first CSI, and the first CSI is obtained through measurement based on downlink data carried by the target PDSCH.

Optionally, the channel state information included in the first information may be further measured through other information, for example, CSI-RS information. In other words, the channel state information is obtained through joint measurement of the target PDSCH and the CSI-RS.

After obtaining the time-frequency resource of the target PDSCH based on the target DCI, the terminal device may determine the first information based on whether the target PDSCH is received on the time-frequency resource of the target PDSCH.

Optionally, if the terminal device receives the target PDSCH on the time-frequency resource of the target PDSCH, the terminal device may determine the first information based on data information included in the target PDSCH, or determine the first information based on a demodulation reference signal (demodulation reference signal, DMRS) corresponding to the target PDSCH. The data information refers to a data packet carried on a PDSCH. The data information included in the target PDSCH may include: data information of each PDSCH in the target PDSCH, or data information of one PDSCH in the target PDSCH. The DMRS corresponding to the target PDSCH may include: a DMRS corresponding to each PDSCH in the target PDSCH, or a DMRS corresponding to one PDSCH in the target PDSCH. The PDSCH may be a newly obtained PDSCH in a plurality of PDSCHs.

Optionally, if the terminal device receives the target PDSCH on the time-frequency resource of the target PDSCH, the terminal device determines the first information based on a pre-coding matrix. The pre-coding matrix may be obtained based on data information of one PDSCH in the target PDSCH or a DMRS corresponding to the PDSCH, or the pre-coding matrix may be determined based on a CSI-RS associated with the PDSCH. When the target PDSCH is a plurality of PDSCHs, the PDSCH may be a newly obtained PDSCH in the plurality of PDSCHs.

Optionally, the newly obtained PDSCH is a last PDSCH in time.

Optionally, if the terminal device does not receive the target PDSCH on the time-frequency resource of the target PDSCH, the first information includes the first state information, and the first state information indicates that the target PDSCH is not received.

It may be understood that successfully receiving the target PDSCH means that DCI corresponding to the target PDSCH is successfully received and the DCI is successfully parsed. Similarly, that the target PDSCH is not received means that the DCI corresponding to the target PDSCH is not received, or the DCI corresponding to the target PDSCH is successfully received, but the DCI fails to be parsed.

504: The terminal device sends the first information to the network device, and correspondingly, the network device receives the first information from the terminal device.

Optionally, the first information and the ACK/NACK in the first time unit may be jointly fed back, or the first information and the ACK/NACK may be independently fed back. When the first information and the ACK/NACK in the first time unit are jointly fed back, the first information and the ACK/NACK in the first time unit may be jointly encoded, or the first information and the ACK/NACK in the first time unit may be independently encoded.

Optionally, the first information and the ACK/NACK in the first time unit may be fed back on a same resource, or may be fed back on different resources. When the first information and the ACK/NACK in the first time unit are fed back on the same resource, the first information and the ACK/NACK in the first time unit may be jointly encoded, or may be independently encoded. When the first information and the ACK/NACK in the first time unit are fed back on different resources, the first information and the ACK/NACK in the first time unit may be independently encoded.

For example, when the first information and the ACK/NACK are fed back in two different time units, the first information and the ACK/NACK are fed back and encoded independently.

For another example, when the first information and the ACK/NACK are fed back on different PUCCHs in the first time unit, the first information and the ACK/NACK are fed back and encoded independently.

For another example, when the first information and the ACK/NACK are fed back on a same PUCCH in the first time unit, the first information and the ACK/NACK are jointly fed back. In this case, the first information and the ACK/NACK may be independently encoded, or may be jointly encoded.

Optionally, the terminal device may send the first information to the network device when determining that a value of the first information is greater than or equal to a preset threshold. Otherwise, the terminal device does not send the first information.

Optionally, a priority of the first information is indicated through DCI corresponding to the target PDSCH corresponding to the first information. The priority is used to determine transmission of the first information. For example, when a time-frequency resource used for transmitting the first information overlaps with a time-frequency resource used for transmitting other information (for example, transmitting other uplink control information or uplink data), transmission of the first information is determined based on the priority. For example, if the priority of the first information is higher than the priority of the other information, the first information is transmitted. Conversely, other information is transmitted. Overlapping of the time-frequency resources may refer to overlapping of time domain resources, overlapping of frequency domain resources, or overlapping of both time domain resources and frequency domain resources. Optionally, overlapping of the time domain resources means that a time-frequency resource corresponding to the first information and a time-frequency resource corresponding to the other information have at least one same symbol. Optionally, overlapping of the frequency domain resources means that a time-frequency resource corresponding to the first information and a time-frequency resource corresponding to the other information have at least one same subcarrier. The DCI may include an indication field of the priority. Optionally, the indication field of the priority further indicates a priority of an ACK/NACK corresponding to a PDSCH scheduled by using the DCI. In this way, overheads may be reduced by directly multiplexing the indication field of the priority.

Embodiments of this application provide a communication method. The terminal device determines one or more downlink transmissions based on the downlink control information, determines the channel state information based on the one or more downlink transmissions indicated by downlink control, reports the channel state information to the network device, and enables the network device to adjust, based on the channel state information reported by the terminal device, a parameter used for data transmission. Therefore, reliability of the data transmission is improved by adjusting the parameter.

Further, optionally, the communication method provided in embodiments of this application may further include: The network device sends the second information to the terminal device, and the terminal device receives the second information from the network device. The second information is used to enable the terminal device to determine the first information based on the target DCI. In other words, the terminal device enables determining of the first information only after receiving the second information. In this way, determining of the first information is more flexible, and overheads may be reduced.

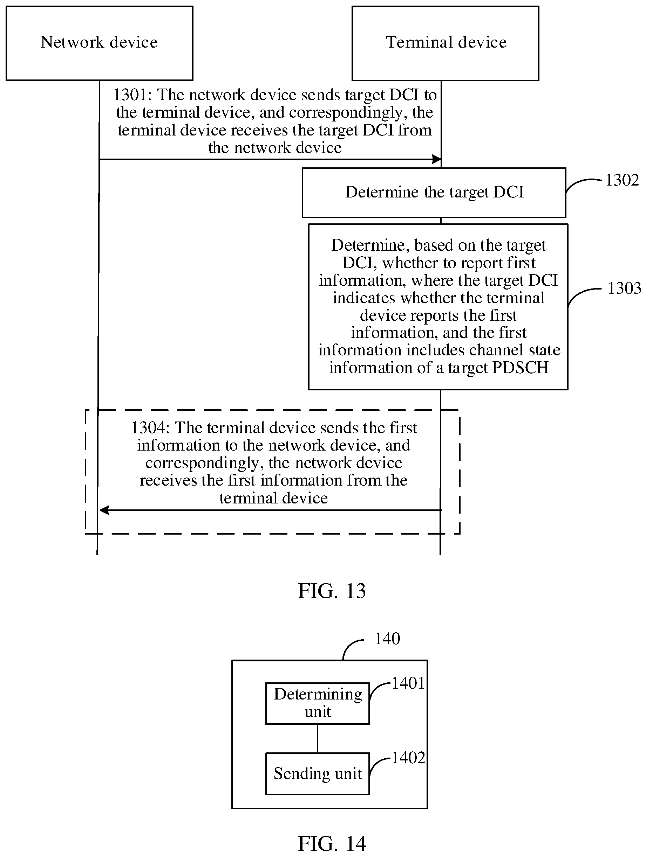

As shown in FIG. 13, the communication method provided in embodiments of this application may include the following step 1301 to step 1304.

1301: A network device sends target DCI to a terminal device, and correspondingly, the terminal device receives the target DCI from the network device.

It should be noted that for a detailed description of step 1301, refer to the description of step 501 in the foregoing embodiment. Details are not described herein again.

1302: The terminal device determines target DCI.

It should be noted that for a specific description of step 1302, refer to the description of step 502 in the foregoing embodiment. Details are not described herein again.

1303: The terminal device determines, based on the target DCI, whether to report first information, where the target DCI indicates whether the terminal device reports the first information, and the first information includes channel state information of a target PDSCH.

Specifically, If the terminal device determines, based on the target DCI, to report the first information, the terminal device may determine the first information based on the target DCI, and perform the following step 1304. If the terminal device determines, based on the target DCI, not to report the first information, the terminal device stops performing the operation.

It should be noted that for a detailed description of determining, by the terminal device, the first information based on the target DCI, refer to the related description in step 503 in the foregoing embodiment. Details are not described herein again.

Optionally, the target DCI may indicate, through a feedback indication field, whether the terminal device reports the first information. In an implementation, the target DCI includes the feedback indication field. The feedback indication field includes a first value or a second value. The first value indicates the terminal device to report the first information, and the second value indicates the terminal device not to report the first information. The first value may be 0, and the second value may be 1. Alternatively, the first value may be 1, and the second value may be 0. Alternatively, the first value and the second value may have other implementations. This is not limited herein.

Optionally, when the feedback indication field indicates the terminal device to report the first information, the terminal device may determine all cells in which the DCI in the first DCI set or the PDSCH in the first PDSCH set is located. In addition, information corresponding to each cell in all the cells is determined in a manner of determining the first information when the target DCI indicates the target cell in step 503. In this case, the first information includes information corresponding to all the cells. Alternatively, the terminal device may determine the first information based on one or more PDSCHs in the first PDSCH set. Alternatively, the terminal device may determine the first information based on one or more PDSCHs indicated by the second indication information. For example, the second indication information indicates a target cell. In this case, the first information is obtained based on a PDSCH in the target cell. For example, if the second indication information indicates a location of the target PDSCH, the first information is determined based on the target PDSCH. Optionally, the second indication information is higher layer signaling. Alternatively, the terminal device may determine the first information based on one PDSCH. A location of the PDSCH in the first PDSCH set is preset, or the PDSCH is indicated by the network device or specified in a protocol, or the PDSCH is a newly received PDSCH in the first PDSCH set, or the PDSCH is a last scheduled PDSCH in the first PDSCH set. Alternatively, the PDSCH may have another implementation. This is not limited in embodiments of this application.

Optionally, when the feedback indication field indicates the terminal device to report the first information, the terminal device may determine the target PDSCH to determine the first information. There may be one or more target PDSCHs. Optionally, when there are a plurality of target PDSCHs, the plurality of target PDSCHs may belong to different cells.

Optionally, the target DCI may indicate, through a trigger state (trigger state), whether the terminal device reports the first information. For example, the target DCI indicates one trigger state. The trigger state includes a first state or a special state. The first state is associated with a CSI-RS and/or a CSI-RS reporting configuration. The CSI-RS reporting configuration may indicate a target PDSCH, or a target cell, or indication information. The indication information indicates the target PDSCH or the target cell. For a specific indication of the target PDSCH, refer to the foregoing step 503. The special state indicates that the terminal device does not report the first information. Optionally, if the terminal device does not receive the target PDSCH, the first information includes first state information, and the first state information indicates that the target PDSCH is not received.

1304: The terminal device sends the first information to the network device, and correspondingly, the network device receives the first information from the terminal device.

The terminal device determines, based on the target DCI, whether to report the first information, and determines and reports the first information only when determining that the first information needs to be reported. When determining that the first information does not need to be reported, the terminal device does not need to determine the first information. When the channel state information does not need to be reported, energy consumption of the terminal device may be reduced, and determining of the first information is also more flexible.

The solutions provided in embodiments of this application are mainly described above from a perspective of a method. To implement the foregoing functions, corresponding hardware structures and/or software modules for performing the functions are included. A person skilled in the art should be easily aware that, in combination with the units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

FIG. 14 is a schematic diagram of a structure of a communication apparatus 140 according to an embodiment of this application. The communication apparatus 140 may be a terminal device, a CPU in a terminal device, a control module in a terminal device, or a client in a terminal device. The communication apparatus 140 is configured to perform the communication method shown in FIG. 5. The communication apparatus 140 may include a determining unit 1401 and a sending unit 1402.

The determining unit 1401 is configured to determine target DCI, where the target DCI indicates a target PDSCH; and determine first information based on the target DCI, where the first information includes channel state information of the target PDSCH. For example, with reference to FIG. 5, the determining unit 1401 may be configured to perform step 502 and step 503. The sending unit 1402 is configured to send the first information determined by the determining unit 1401 to a network device. For example, with reference to FIG. 5, the sending unit 1402 may be configured to perform step 504.

Optionally, the target PDSCH belongs to a first PDSCH set, the target DCI belongs to a first DCI set, and the first DCI set is associated with the first PDSCH set.

Optionally, the method for "the first DCI set is associated with the first PDSCH set" may include: ACK feedback information or NACK feedback information corresponding to at least two PDSCHs in the first PDSCH set is located in one time unit. The ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by DCI in the first DCI set belongs to the first PDSCH set.

Optionally, the target DCI indicates at least one of the following: the target PDSCH or a target cell, where the target cell is a cell in which the target PDSCH is located.

Optionally, the target DCI indicates the target PDSCH, and the target PDSCH is one or more PDSCHs in the first PDSCH set.

Optionally, the method for "the target DCI indicates the target PDSCH" may include: The target DCI indicates a location of the target PDSCH in the first PDSCH set, and the PDSCHs in the first PDSCH set are sorted according to a preset rule.

Optionally, the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

Optionally, the target DCI indicates the target cell, and the target PDSCH is one or more PDSCHs in the first PDSCH set that are located in the target cell.

Optionally, the determining unit 1401 is specifically configured to: determine the first information based on data information included in the target PDSCH; or determine the first information based on a DMRS corresponding to the target PDSCH.

Optionally, if the terminal device does not receive the target PDSCH, the first information includes first state information, and the first state information indicates that the target PDSCH is not received.

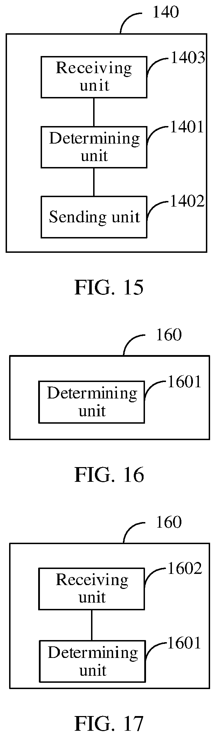

Optionally, as shown in FIG. 15, the communication apparatus 140 may further include: a receiving unit 1403. The receiving unit 1403 is configured to receive second information from the network device, where the second information is used to enable the terminal device to determine the first information based on the target DCI.

Certainly, the communication apparatus 140 provided in embodiments of this application includes but is not limited to the foregoing modules.

In actual implementation, the determining unit 1401 may be implemented by a processor of the communication apparatus shown in FIG. 4. The sending unit 1402 and the receiving unit 1403 may be implemented through a communication interface of the communication apparatus shown in FIG. 4. For a specific execution process, refer to the description of the communication method part shown in FIG. 5. Details are not described herein again.

FIG. 16 is a schematic diagram of a structure of another communication apparatus 160 according to an embodiment of this application. The communication apparatus 160 may be a terminal device, a CPU in a terminal device, a control module in a terminal device, or a client in a terminal device. The communication apparatus 160 is configured to perform the communication method shown in FIG. 13. The communication apparatus 160 may include a determining unit 1601.

The determining unit 1601 is configured to determine target DCI, and determine, based on the target DCI, whether to report first information. The target DCI indicates whether the terminal device reports the first information. The first information includes channel state information of a target PDSCH, the target PDSCH belongs to a first PDSCH set, the target DCI belongs to a first DCI set, and the first DCI set is associated with the first PDSCH set. For example, with reference to FIG. 13, the determining unit 1601 may be configured to perform step 1303 and step 1304. Optionally, the method for "the first DCI set is associated with the first PDSCH set" may include: ACK feedback information or NACK feedback information corresponding to at least two PDSCHs in the first PDSCH set is located in one time unit. The ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by DCI in the first DCI set belongs to the first PDSCH set.

Optionally, the determining unit 1601 is specifically configured to: when the target DCI indicates the terminal device to report the first information, determine, by the terminal device, the first information based on the target DCI. The target DCI further indicates the target PDSCH.

Optionally, the target DCI indicates at least one of the following: the target PDSCH or a target cell, where the target cell is a cell in which the target PDSCH is located.

Optionally, the target DCI indicates the target PDSCH, and the target PDSCH is one or more PDSCHs in the first PDSCH set.

Optionally, the method for "the target DCI indicates the target PDSCH" may include: The target DCI indicates a location of the target PDSCH in the first PDSCH set, and the PDSCHs in the first PDSCH set are sorted according to a preset rule.

Optionally, the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

Optionally, the target DCI indicates the target cell, and the target PDSCH is one or more PDSCHs in the first PDSCH set that are located in the target cell.

Optionally, the determining unit 1601 is specifically configured to: determine the first information based on data information included in the target PDSCH; or determine the first information based on a DMRS corresponding to the target PDSCH.

Optionally, if the terminal device does not receive the target PDSCH, the first information includes first state information, and the first state information indicates that the target PDSCH is not received.

Optionally, as shown in FIG. 17, the communication apparatus 160 may further include: a receiving unit 1602. The receiving unit 1602 is configured to receive second information from the network device, where the second information is used to enable the terminal device to determine the first information based on the target DCI.

Certainly, the communication apparatus 160 provided in embodiments of this application includes but is not limited to the foregoing modules.

In actual implementation, the determining unit 1601 may be implemented by a processor of the communication apparatus shown in FIG. 4. The receiving unit 1602 may be implemented through a communication interface of the communication apparatus shown in FIG. 4. For a specific execution process, refer to the description of the communication method part shown in FIG. 13. Details are not described herein again.

Another embodiment of this application further provides a computer-readable storage medium. The computer-readable storage medium stores computer instructions. When the computer instructions are run on a terminal device, the terminal device is enabled to perform steps performed by the terminal device in the method procedures shown in the foregoing method embodiments. Another embodiment of this application further provides a chip system, and the chip system is used in a terminal device. The chip system includes one or more interface circuits and one or more processors. The interface circuit and the processor are interconnected through a cable. The interface circuit is configured to receive a signal from a memory of the terminal device, and send the signal to the processor. The signal includes computer instructions stored in the memory. When the processor executes the computer instructions, the terminal device performs steps performed by the terminal device in the method procedures shown in the foregoing method embodiments.

In another embodiment of this application, a computer program product is further provided. The computer program product includes computer instructions, and when the computer instructions are run on a terminal device, the terminal device is enabled to perform steps performed by the terminal device in the method procedures shown in the foregoing method embodiments.

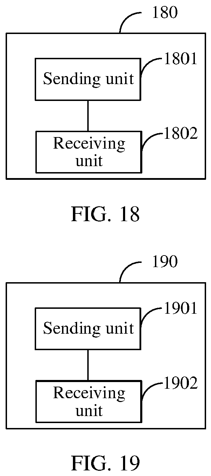

FIG. 18 is a schematic diagram of a structure of a communication apparatus 180 according to an embodiment of this application. The communication apparatus 180 may be a network device, a CPU in a network device, a control module in a network device, or a client in a network device. The communication apparatus 180 is configured to perform the communication method shown in FIG. 5. The communication apparatus 180 may include a sending unit 1801 and a receiving unit 1802.

The sending unit 1801 is configured to send a first DCI set to a terminal device. For example, with reference to FIG. 5, the sending unit 1801 may be configured to perform step 501. The receiving unit 1802 is configured to receive first information from the terminal device. The first information is determined based on the target DCI, the target DCI is determined based on the first DCI set, the target DCI indicates the target PDSCH, and the first information includes channel state information of the target PDSCH. For example, with reference to FIG. 5, the receiving unit 1802 may be configured to perform step 504.

Optionally, the sending unit 1801 is further configured to send second information to the terminal device, where the second information is used to enable the terminal device to determine the first information based on the target DCI.

Optionally, the target PDSCH belongs to a first PDSCH set, the target DCI belongs to a first DCI set, and the first DCI set is associated with the first PDSCH set.

Optionally, the method for "the first DCI set is associated with the first PDSCH set" may include: ACK feedback information or NACK feedback information corresponding to at least two PDSCHs in the first PDSCH set is located in one time unit. The ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by DCI in the first DCI set belongs to the first PDSCH set.

Optionally, the target DCI indicates at least one of the following: the target PDSCH or a target cell, where the target cell is a cell in which the target PDSCH is located.

Optionally, the target DCI indicates the target PDSCH, and the target PDSCH is one or more PDSCHs in the first PDSCH set.

Optionally, the method for "the target DCI indicates the target PDSCH" may include: The target DCI indicates a location of the target PDSCH in the first PDSCH set, and the PDSCHs in the first PDSCH set are sorted according to a preset rule.

Optionally, the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

Optionally, the target DCI indicates the target cell, and the target PDSCH is one or more PDSCHs in the first PDSCH set that are located in the target cell.

Certainly, the communication apparatus 180 provided in embodiments of this application includes but is not limited to the foregoing modules.

In actual implementation, the sending unit 1801 and the receiving unit 1802 may be implemented through a communication interface of the communication apparatus shown in FIG. 4. For a specific execution process, refer to the description of the communication method part shown in FIG. 5. Details are not described herein again.

FIG. 19 is a schematic diagram of a structure of a communication apparatus 190 according to an embodiment of this application. The communication apparatus 190 may be a network device, a CPU in a network device, a control module in a network device, or a client in a network device. The communication apparatus 190 is configured to perform the communication method shown in FIG. 13. The communication apparatus 190 may include a sending unit 1901 and a receiving unit 1902.

The sending unit 1901 is configured to send a first DCI set to a terminal device. For example, with reference to FIG. 13, the sending unit 1901 may be configured to perform step 1301. The receiving unit 1902 is configured to receive first information from the terminal device. The first information is determined based on the target DCI when the target DCI indicates the terminal device to report the first information, the target DCI is determined based on the first DCI set, the target DCI indicates whether the terminal device reports the first information, and the target DCI indicates the target PDSCH. The first information includes channel state information of the target PDSCH. The target PDSCH belongs to a first PDSCH set, the target DCI belongs to a first DCI set, and the first DCI set is associated with the first PDSCH set. For example, with reference to FIG. 13, the receiving unit 1902 may be configured to perform step 1304.

Optionally, the method for "the first DCI set is associated with the first PDSCH set" may include: ACK feedback information or NACK feedback information corresponding to at least two PDSCHs in the first PDSCH set is located in one time unit. The ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by DCI in the first DCI set belongs to the first PDSCH set.

Optionally, the target DCI indicates at least one of the following: the target PDSCH or a target cell, where the target cell is a cell in which the target PDSCH is located.

Optionally, the target DCI indicates the target PDSCH, and the target PDSCH is one or more PDSCHs in the first PDSCH set.

Optionally, the method for "the target DCI indicates the target PDSCH" may include: The target DCI indicates a location of the target PDSCH in the first PDSCH set, and the PDSCHs in the first PDSCH set are sorted according to a preset rule.

Optionally, the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

Optionally, the target DCI indicates the target cell, and the target PDSCH is one or more PDSCHs in the first PDSCH set that are located in the target cell.

Optionally, the sending unit 1901 is further configured to send second information to the terminal device, where the second information is used to enable the terminal device to determine the first information based on the target DCI.

Certainly, the communication apparatus 190 provided in embodiments of this application includes but is not limited to the foregoing modules.

In actual implementation, the sending unit 1901 and the receiving unit 1902 may be implemented through a communication interface of the communication apparatus shown in FIG. 4. For a specific execution process, refer to the description of the communication method part shown in FIG. 13. Details are not described herein again.

Another embodiment of this application further provides a computer-readable storage medium. The computer-readable storage medium stores computer instructions. When the computer instructions are run on a network device, the network device is enabled to perform steps performed by the network device in the method procedures shown in the foregoing method embodiments. Another embodiment of this application further provides a chip system, and the chip system is used in a network device. The chip system includes one or more interface circuits and one or more processors. The interface circuit and the processor are interconnected through a cable. The interface circuit is configured to receive a signal from a memory of the network device, and send the signal to the processor. The signal includes computer instructions stored in the memory. When the processor executes the computer instructions, the network device performs steps performed by the network device in the method procedures shown in the foregoing method embodiments.

In another embodiment of this application, a computer program product is further provided. The computer program product includes computer instructions, and when the computer instructions are run on a network device, the network device is enabled to perform steps performed by the network device in the method procedures shown in the foregoing method embodiments.

All or a part of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer-executable instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

The foregoing descriptions are merely specific implementations of this application. Any variation or replacement readily figured out by a person skilled in the art based on the specific implementations provided in this application shall fall within the protection scope of this application.

**Claims**

1. A communication method, applied to a terminal device, wherein the method comprises:

    determining target downlink control information DCI, wherein the target DCI indicates a target physical downlink shared channel PDSCH;
    determining first information based on the target DCI, wherein the first information comprises channel state information of the target PDSCH; and
    sending the first information to a network device.

2. The communication method according to claim 1, wherein
the target PDSCH belongs to a first PDSCH set, the target DCI belongs to a first DCI set, and the first DCI set is associated with the first PDSCH set.

3. The communication method according to claim 2, wherein that the first DCI set is associated with the first PDSCH set comprises:
Acknowledgment ACK feedback information or negative acknowledgment NACK feedback information corresponding to at least two PDSCHs in the first PDSCH set is located in one time unit, wherein the ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by using DCI in the first DCI set belongs to the first PDSCH set.

4. The communication method according to any one of claims 1 to 3, wherein
the target DCI indicates at least one of the following: the target PDSCH or a target cell, wherein the target cell is a cell in which the target PDSCH is located.

5. The communication method according to any one of claims 2 to 4, wherein the target DCI indicates the target PDSCH; and
the target PDSCH is one or more PDSCHs in the first PDSCH set.

6. The communication method according to any one of claims 2 to 5, wherein that the target DCI indicates the target PDSCH comprises:
PDSCHs in the first PDSCH set are sorted according to a preset rule, wherein the target DCI indicates a location of the target PDSCH in the first PDSCH set.

7. The communication method according to any one of claims 2 to 6, wherein
the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

8. The communication method according to any one of claims 2 to 7, wherein the target DCI indicates the target cell, and the target PDSCH is one or more PDSCHs in the first PDSCH set that are located in the target cell.

9. The communication method according to any one of claims 1 to 8, wherein the determining first information based on the target DCI comprises:
determining the first information based on data information comprised in the target PDSCH; or determining the first information based on a demodulation reference signal DMRS corresponding to the target PDSCH.

10. The communication method according to any one of claims 1 to 9, wherein if the target PDSCH is not received, the first information comprises first state information, and the first state information indicates that the target PDSCH is not received.

11. The communication method according to any one of claims 1 to 10, wherein the communication method further comprises:
receiving second information from the network device, wherein the second information is used to enable the terminal device to determine the first information based on the target DCI.

12. A communication method, applied to a network device, wherein the method comprises:

sending target downlink control information DCI to a terminal device, wherein the target DCI indicates a target physical downlink shared channel PDSCH; and
receiving first information from the terminal device, wherein the first information is determined based on the target DCI, and the first information comprises channel state information of the target PDSCH.

13. The communication method according to claim 12, wherein
the target PDSCH belongs to a first PDSCH set, the target DCI belongs to a first DCI set, and the first DCI set is associated with the first PDSCH set.

14. The communication method according to claim 13, wherein that the first DCI set is associated with the first PDSCH set comprises:
acknowledgment ACK feedback information or negative acknowledgment NACK feedback information corresponding to at least two PDSCHs in the first PDSCH set is located in one time unit, wherein the ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by using DCI in the first DCI set belongs to the first PDSCH set.

15. The communication method according to any one of claims 12 to 14, wherein
the target DCI indicates at least one of the following: the target PDSCH or a target cell, wherein the target cell is a cell in which the target PDSCH is located.

16. The communication method according to any one of claims 13 to 15, wherein the target DCI indicates the target PDSCH; and
the target PDSCH is one or more PDSCHs in the first PDSCH set.

17. The communication method according to any one of claims 13 to 16, wherein that the target DCI indicates the target PDSCH comprises:
PDSCHs in the first PDSCH set are sorted according to a preset rule, wherein the target DCI indicates a location of the target PDSCH in the first PDSCH set.

18. The communication method according to any one of claims 13 to 17, wherein
the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

19. The communication method according to any one of claims 13 to 18, wherein the target DCI indicates the target cell, and the target PDSCH is one or more PDSCHs in the first PDSCH set that are located in the target cell.

20. The communication method according to any one of claims 12 to 19, wherein the communication method further comprises:
sending second information to the terminal device, wherein the second information is used to enable the terminal device to determine the first information based on the target DCI.

21. A communication apparatus, located in a terminal device, wherein the apparatus comprises:

a determining unit, configured to determine target downlink control information DCI, wherein the target DCI indicates a target physical downlink shared channel PDSCH; and determine first information based on the target DCI, wherein the first information comprises channel state information of the target PDSCH; and
a sending unit, configured to send the first information determined by the determining unit to a network device.

**22.** The communication apparatus according to claim 21, wherein
the target PDSCH belongs to a first PDSCH set, the target DCI belongs to a first DCI set, and the first DCI set is associated with the first PDSCH set.

**23.** The communication apparatus according to claim 22, wherein that the first DCI set is associated with the first PDSCH set comprises:
acknowledgment ACK feedback information or negative acknowledgment NACK feedback information corresponding to at least two PDSCHs in the first PDSCH set is located in one time unit, wherein the ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by using DCI in the first DCI set belongs to the first PDSCH set.

**24.** The communication apparatus according to any one of claims 21 to 23, wherein
the target DCI indicates at least one of the following: the target PDSCH or a target cell, wherein the target cell is a cell in which the target PDSCH is located.

**25.** The communication apparatus according to any one of claims 22 to 24, wherein

the target DCI indicates the target PDSCH; and
the target PDSCH is one or more PDSCHs in the first PDSCH set.

**26.** The communication apparatus according to any one of claims 22 to 25, wherein that the target DCI indicates the target PDSCH comprises:
PDSCHs in the first PDSCH set are sorted according to a preset rule, wherein the target DCI indicates a location of the target PDSCH in the first PDSCH set.

**27.** The communication apparatus according to any one of claims 22 to 26, wherein
the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

**28.** The communication apparatus according to any one of claims 22 to 27, wherein the target DCI indicates the target cell, and the target PDSCH is one or more PDSCHs in the first PDSCH set that are located in the target cell.

**29.** The communication apparatus according to any one of claims 21 to 28, wherein the determining unit is specifically configured to:
determine the first information based on data information comprised in the target PDSCH; or determine the first information based on a demodulation reference signal DMRS corresponding to the target PDSCH.

**30.** The communication apparatus according to any one of claims 21 to 29, wherein if the target PDSCH is not received, the first information comprises first state information, and the first state information indicates that the target PDSCH is not received.

**31.** The communication apparatus according to any one of claims 21 to 30, wherein the communication apparatus further comprises: a receiving unit, wherein
the receiving unit is configured to receive second information from the network device, wherein the second information is used to enable the terminal device to determine the first information based on the target DCI.

**32.** A communication apparatus, located in a network device, wherein the apparatus comprises:

a sending unit, configured to send target downlink control information DCI to a terminal device, wherein the target DCI indicates a target physical downlink shared channel PDSCH; and
a receiving unit, configured to receive first information from the terminal device, wherein the first information is determined based on the target DCI, and the first information comprises channel state information of the target PDSCH.

**33.** The communication apparatus according to claim 32, wherein
the target PDSCH belongs to a first PDSCH set, the target DCI belongs to a first DCI set, and the first DCI set is associated with the first PDSCH set.

34. The communication apparatus according to claim 33, wherein that the first DCI set is associated with the first PDSCH set comprises:

    acknowledgment ACK feedback information or negative acknowledgment NACK feedback information corresponding to at least two PDSCHs in the first PDSCH set is located in one time unit, wherein the ACK feedback information indicates that decoding of a corresponding PDSCH succeeds, and the NACK feedback information indicates that decoding of a corresponding PDSCH fails; and DCI for scheduling a PDSCH in the first PDSCH set belongs to the first DCI set, or a PDSCH scheduled by using DCI in the first DCI set belongs to the first PDSCH set.

35. The communication apparatus according to any one of claims 32 to 34, wherein

    the target DCI indicates at least one of the following: the target PDSCH or a target cell, wherein the target cell is a cell in which the target PDSCH is located.

36. The communication apparatus according to any one of claims 33 to 35, wherein the target DCI indicates the target PDSCH; and

    the target PDSCH is one or more PDSCHs in the first PDSCH set.

37. The communication apparatus according to any one of claims 33 to 36, wherein that the target DCI indicates the target PDSCH comprises:

    PDSCHs in the first PDSCH set are sorted according to a preset rule, wherein the target DCI indicates a location of the target PDSCH in the first PDSCH set.

38. The communication apparatus according to any one of claims 33 to 37, wherein

    the target PDSCH is an $N^{th}$ PDSCH that is obtained after the PDSCHs in the first PDSCH set are sorted according to the preset rule, and the $N^{th}$ PDSCH is an $N^{th}$ PDSCH in a positive order or in a reverse order.

39. The communication apparatus according to any one of claims 33 to 38, wherein the target DCI indicates the target cell, and the target PDSCH is one or more PDSCHs in the first PDSCH set that are located in the target cell.

40. The communication apparatus according to any one of claims 32 to 39, wherein

    the sending unit is further configured to send second information to the terminal device, wherein the second information is used to enable the terminal device to determine the first information based on the target DCI.

41. A communication apparatus, wherein the communication apparatus comprises a memory and a processor; the memory is coupled to the processor; the memory is configured to store computer program code, and the computer program code comprises computer instructions; and when the processor executes the computer instructions, the communication apparatus performs the communication method according to any one of claims 1 to 11 or the communication method according to any one of claims 12 to 20.

42. A computer-readable storage medium, comprising computer instructions, wherein when the computer instructions are run on a communication apparatus, the communication apparatus is enabled to perform the communication method according to any one of claims 1 to 11 or the communication method according to any one of claims 12 to 20.

43. A communication system, wherein the communication system comprises: the terminal device that performs the communication method according to any one of claims 1 to 11, and the network device that performs the communication method according to any one of claims 12 to 20.

Communication system

FIG. 1

FIG. 2

FIG. 3a

FIG. 3b

FIG. 3c

P-CSI    SP-CSI    A-CSI

FIG. 3d

41 — Processor

CPU 0

CPU 1

45 — Processor

CPU 0

CPU 1

42 — Memory

Bus 44

Communication interface 43

Receiving unit

Sending unit

## FIG. 4

Network device

Terminal device

501: The network device sends target DCI to the terminal device, and correspondingly, the terminal device receives the target DCI from the network device

502 — Determine the target DCI

503: Determine first information based on the target DCI, where the target DCI indicates a target PDSCH, and the first information includes channel state information of the target PDSCH — 503

504: The terminal device sends the first information to the network device, and correspondingly, the network device receives the first information from the terminal device

## FIG. 5

PUCCH

| K1=8 | K1=7 | | K1=5 | | K1=3 | K1=2 | | | |
|------|------|---|------|---|------|------|---|---|---|
| 0 | 1 | 2 | 3 | 4 | 5 | 6 | 7 | 8 | 9 |

FIG. 6

PUCCH

| Slot 0 | | | PDSCH | PDSCH | | | PDSCH | Slot 8 |
|--------|---|---|-------|-------|---|---|-------|--------|

FIG. 7

PUCCH

| Slot 0 | PDSCH | | PDSCH | PDSCH | | | PDSCH | Slot 8 |
|--------|-------|---|-------|-------|---|---|-------|--------|

FIG. 8

DCI 1　　DCI 2　DCI 3　DCI 4　DCI 5

Cell index 1

FIG. 9

DCI 1

Cell index 0

DCI 2

Cell index 1

DCI 3

Cell index 2

FIG. 10

DCI 1　　　　　DCI 4　　　　　DCI 7

Cell index 0

DCI 2　　　　　DCI 5　　　　　DCI 8

Cell index 1

DCI 3　　　　　DCI 6　　　　　DCI 9

Cell index 2

FIG. 11a

DCI 1　DCI 4

Cell index 0

DCI 2

Cell index 1

DCI 3

Cell index 2

FIG. 11b

First PDSCH Target PDSCH

Second PDSCH

| PDSCH 1 | PDSCH 2 | PDSCH 3 | PDSCH 4 | PDSCH 5 |
|---------|---------|---------|---------|---------|

FIG. 12a

Target PDSCH First PDSCH

Second PDSCH

| PDSCH 1 | PDSCH 2 | PDSCH 3 | PDSCH 4 | PDSCH 5 |
|---------|---------|---------|---------|---------|

FIG. 12b

| Network device | | Terminal device |
|---|---|---|

1301: The network device sends target DCI to the terminal device, and correspondingly, the terminal device receives the target DCI from the network device

Determine the target DCI —— 1302

Determine, based on the target DCI, whether to report first information, where the target DCI indicates whether the terminal device reports the first information, and the first information includes channel state information of a target PDSCH —— 1303

1304: The terminal device sends the first information to the network device, and correspondingly, the network device receives the first information from the terminal device

FIG. 13

140

| Determining unit | 1401 |
|---|---|
| Sending unit | 1402 |

FIG. 14

140

Receiving
unit —1403

Determining
unit —1401

Sending unit —1402

FIG. 15

160

Determining
unit —1601

FIG. 16

160

Receiving
unit —1602

Determining
unit —1601

FIG. 17

180

Sending unit — 1801

Receiving unit — 1802

FIG. 18

190

Sending unit — 1901

Receiving unit — 1902

FIG. 19

# INTERNATIONAL SEARCH REPORT

International application No.

**PCT/CN2022/077332**

| A. | CLASSIFICATION OF SUBJECT MATTER |
| --- | --- |
| | H04L 1/00(2006.01)i |

According to International Patent Classification (IPC) or to both national classification and IPC

| B. | FIELDS SEARCHED |
| --- | --- |

Minimum documentation searched (classification system followed by classification symbols)

H04L, H04W

Documentation searched other than minimum documentation to the extent that such documents are included in the fields searched

Electronic data base consulted during the international search (name of data base and, where practicable, search terms used)

CNTXT; CNKI; ENTXT; DWPI; 3GPP: 多个, 集合, 关联, 下行控制信息, 信道状态信息, 解调参考信号, 目标, ACK, CSI, DCI, PDSCH, DMRS, multiple, set, association, downlink, control, channel, state, information, demodulation, reference, signal, target

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111416684 A (TELECOMMUNICATIONS TECHNOLOGY RESEARCH INSTITUTE CO., LTD.) 14 July 2020 (2020-07-14)<br>description, paragraphs [0138]-[0198] | 1-43 |
| A | CN 111130735 A (VIVO COMMUNICATION TECHNOLOGY CO., LTD.) 08 May 2020 (2020-05-08)<br>entire document | 1-43 |
| A | US 2020112419 A1 (LENOVO PRIVATE LTD., SINGAPORE) 09 April 2020 (2020-04-09)<br>entire document | 1-43 |
| A | SAMSUNG. "R1-2008160 "eURLLC CSI""<br>*3GPP tsg_ran\wg1_rl1*, 21 October 2020 (2020-10-21),<br>entire document | 1-43 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 May 2022** | **12 May 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/077332**

| Patent document cited in search report | | | Publication date (day/month/year) | Patent family member(s) | | | Publication date (day/month/year) |
|---|---|---|---|---|---|---|---|
| CN | 111416684 | A | 14 July 2020 | WO | 2020140967 | A1 | 09 July 2020 |
| CN | 111130735 | A | 08 May 2020 | WO | 2020221047 | A1 | 05 November 2020 |
| | | | | KR | 20210149846 | A | 09 December 2021 |
| | | | | EP | 3965343 | A1 | 09 March 2022 |
| | | | | US | 2022052793 | A1 | 17 February 2022 |
| US | 2020112419 | A1 | 09 April 2020 | EP | 3861662 | A1 | 11 August 2021 |
| | | | | US | 2021399862 | A1 | 23 December 2021 |
| | | | | WO | 2020070728 | A1 | 09 April 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110364167